# EUROPEAN PATENT SPECIFICATION

(11) **EP 2 433 903 B1**
(45) Date of publication and mention of the grant of the patent: **20.04.2016**
(21) Application number: 10777592.6
(22) Date of filing: 21.05.2010
(51) Int. Cl.: C01B 3/04, H01M 8/00, H01M 8/06, H01M 8/10, H01M 8/18

(54) **HYDROGEN GENERATION SYSTEM AND HOT WATER PRODUCTION SYSTEM**
WASSERSTOFFERZEUGUNGSSYSTEM UND HEISSWASSERBEREITUNGSSYSTEM
SYSTÈME DE PRODUCTION D'HYDROGÈNE ET SYSTÈME DE PRODUCTION D'EAU CHAUDE

(30) Priority: 21.05.2009 JP 2009123124
(43) Date of publication of application: 28.03.2012
(73) Proprietor: Panasonic Intellectual Property Management Co., Ltd., Osaka 540-6207 (JP)
(72) Inventor: TOKUHIRO, Kenichi, Shiromi, Chuo-ku Osaka-shi Osaka 540-6207 (JP); HATOH, Kazuhito, Shiromi, Chuo-ku Osaka-shi Osaka 540-6207 (JP); NOMURA, Takaiki, Shiromi, Chuo-ku Osaka-shi Osaka 540-6207 (JP); KUROHA, Tomohiro, Shiromi, Chuo-ku Osaka-shi Osaka 540-6207 (JP); TANIGUCHI, Noboru, Shiromi, Chuo-ku Osaka-shi Osaka 540-6207 (JP); SUZUKI, Takahiro, Shiromi, Chuo-ku Osaka-shi Osaka 540-6207 (JP); TAMURA, Satoru, Shiromi, Chuo-ku Osaka-shi Osaka 540-6207 (JP); OKAICHI, Atsuo, Shiromi, Chuo-ku Osaka-shi Osaka 540-6207 (JP); MIYAMURA, Norihiro, Shiromi, Chuo-ku Osaka-shi Osaka 540-6207. (JP)
(74) Representative: Eisenführ Speiser
(86) International application number: PCT/JP2010/003451
(87) International publication number: WO 2010/134356

(56) References cited:
- JP-A- 2000 054 174
- JP-A- 2002 095 167
- JP-A- 2003 054 902
- JP-A- 2005 281 716
- JP-A- 2007 196 165
- JP-T- 2007 528 935
- JP-T- 2008 507 464
- US-A- 5 306 577
- US-A1- 2003 207 161
- US-A1- 2008 213 641
- US-A1- 2008 299 432
- US-B2- 7 014 932

## Description

### TECHNICAL FIELD

The present invention relates to a hydrogen generation system and a hot water production system that are provided with a device for generating hydrogen by irradiation with light.

### BACKGROUND ART

Conventionally, it is known that a semiconductor electrode allows water in an electrolyte to be decomposed by being irradiated with light in the state where the semiconductor electrode and a counter electrode are in contact with the electrolyte while the semiconductor electrode and the counter electrode are electrically connected together, thereby generating hydrogen and oxygen (see, for example,

### Patent Literature 1).

Patent Literature 1 discloses an apparatus that uses an n-type semiconductor as a semiconductor electrode and is capable of generating hydrogen and oxygen by decomposing water through irradiation of a semiconductor electrode with light in the state where the semiconductor electrode and a counter electrode are electrically connected together.

There also is conventionally proposed a energy system including a hydrogen generation apparatus that generates hydrogen by decomposing water using sunlight and a semiconductor that functions as a photocatalyst, a hydrogen storage unit that stores hydrogen generated in the hydrogen generation apparatus, and a fuel cell that converts hydrogen stored in the hydrogen storage unit into power (see, for example, Patent Literature 2).

Furthermore, there is conventionally disclosed a system in which the heat contained in water warmed by irradiation with sunlight is accumulated in a heat accumulator provided on a water circulation path and the heat is used in an application to hot water, in the energy system including the hydrogen generation apparatus that generates hydrogen and oxygen by decomposing water using sunlight and the semiconductor that functions as a photocatalyst (see, for example,

### Patent Literature 3).

Moreover, an electrochemical cell system is known which comprises a fuel cell module with a fuel cell outlet, an electrolysis module including an electrolysis water inlet in fluid communication with a water storage device and a hydrogen gas outlet in fluid communication with a hydrogen storage device. Additionally, heat exchangers can be provided with that known electrochemical cell (see, for example,

### Patent Literature 4).

Additionally, a reaction cell for the photoelectrochemical production of hydrogen gas is known. This known reaction cell comprises a housing which is filled with aqueous electrolyte, a pair of electrodes consisting of a first electrode of a doped conductor which is immersed in the electrolytes and a second electrode which is made of metal and which is immersed in the electrolytes and which is electrically conductively connected to the first electrode. A light source can be provided which illuminates the pair of electrodes. The electrodes are connected to each other in a flat manner, the pair of electrodes divides the reaction cell into two chambers, wherein the chambers are connected to each other in a fluidically conducting manner and the housing is provided with at least one gas outlet (see, for example, Patent Literature 5).

### CITATION LIST

### Patent Literature

Patent Literature 1: JP 50(1975)-124584 A
Patent Literature 2: JP 2000-333481 A
Patent Literature 3: JP 57(1982)-191202 A
Patent Literature 4: US patent 7,014,932
Patent Literature 5: US patent application 2008/0213641

### SUMMARY OF INVENTION

### Technical Problem

However, the configurations disclosed in Patent Literatures 1 and 2 involve a system that recovers only hydrogen, as an energy source, generated by decomposing water with a semiconductor electrode, whereas no consideration is given to the use of heat energy accumulated in hot water produced through heating by sunlight. That is, solar energy-use efficiency is insufficient in the configurations according to Patent Literatures 1 and 2.

Also, the configurations according to Patent Literatures 1 and 2 have the following problem. That is, when heat is accumulated in water to be subjected to decomposition on the semiconductor electrode through sunlight irradiation and the temperature of the water increases, the distance between atoms that constitute the semiconductor increases due to the temperature increase, thereby changing the energy band gap of the semiconductor material, which makes it impossible for the semiconductor electrode to exhibit a performance as designed.

In addition, the system according to Patent Literature 3 uses water to be subjected to decomposition with the semiconductor electrode, directly as hot water. Water splitting phenomenon with a semiconductor electrode is dominated by electrochemical mechanism, and the water splitting efficiency is significantly susceptible to the influence of the conductivity or pH of the water. The system according to Patent Literature 3 uses water to be subjected to decomposition with the semiconductor electrode, directly as hot water, because of which an electrolyte, a buffer for adjusting pH, and the like, are not allowed to be incorporated in the water. As a result, the hydrogen generation efficiency with the semiconductor electrode is significantly reduced, which is a problem.

In the system according to Patent Literature 3, there also are problems of difficulty of separation between hydrogen and oxygen, and possibility of risk of hydrogen explosion, because hydrogen and oxygen are generated in a mixed state. The fuel cell system known from Patent Literature 4, has a complicated inefficient design.

The present invention has been made to solve the above-mentioned conventional problems. It is an object of the present invention to provide a hydrogen generation system that enables the effective use of heat energy of water heated by sunlight, as well as achieving high hydrogen generation efficiency.

Moreover, it is another object of the present invention to provide a hot water production system using solar energy.

### Solution to Problem

The technical problem mentioned above, is solved by the features of claim 1. The hydrogen generation system of the present invention includes: a hydrogen generation unit holding a first liquid containing water, the hydrogen generation unit allowing a part of the water contained in the first liquid to be decomposed into hydrogen and oxygen as well as at least a part of the first liquid to be heated, by being irradiated with sunlight, a first heat exchanger for cooling the first liquid that has been heated in the hydrogen generation unit and heating a second liquid that is water, by heat exchange between the first liquid and the second liquid, a mechanism for introducing the first liquid that has been cooled in the first heat exchanger into the hydrogen generation unit, a fuel cell, a hot water storage tank, a second heat exchanger for heating the second liquid that has been heated in the first heat exchanger, by heat exchange with the fuel cell, and a mechanism for merging the second liquid that has been heated in the second heat exchanger with hot water in the hot water storage tank. Moreover, it is provided a mechanism for adjusting a temperature of the second liquid by supplying cold water to the second liquid after having been heated in the first heat exchanger, but before being subjected to heat exchange with the fuel cell in the second heat exchanger.

In particular, the hot water production system of the present invention includes: a solar water heater that holds a first liquid and that allows at least a part of the first liquid to be heated by being irradiated with sunlight; a fuel cell; and a mechanism that supplies hot water using heat recovered from the first liquid that has been heated in the solar water heater and heat generated in the fuel cell.

### Advantageous Effects of Invention

According to the hydrogen generation system of the present invention, the first liquid containing water to be subjected to decomposition in the hydrogen generation unit is subjected to heat exchange with the second liquid that is water, so that the second liquid is heated. The second liquid is used for various applications to extract heat. That is, it becomes possible to allow an electrolyte, a pH adjuster, and the like, to be incorporated in the first liquid that is used for water decomposition in the hydrogen generation unit, for the purpose of increasing the hydrogen generation efficiency. At the same time, an excessive increase in the temperature of the first liquid to be supplied to the hydrogen generation unit is prevented, and therefore the band gap energy of the optical semiconductor used in the hydrogen generation unit remains unchanged, thus allowing high quantum efficiency as designed to be exhibited. Further, the hydrogen generation system of the present invention allows the heat energy obtained from sunlight to be used effectively, as well. Meanwhile, the hot water production system of the present invention uses heat energy emitted from the fuel cell in addition to solar energy. Therefore, the present invention can provide a hot water production system with good energy efficiency.

### BRIEF DESCRIPTION OF DRAWINGS

Fig. 1 is a view showing the mechanism of water decomposition by a photocatalyst.
Fig. 2A is a system block diagram showing an example of a hydrogen generation system in Embodiment 1 of the present invention.
Fig. 2B is a system block diagram showing another example of the hydrogen generation system in Embodiment 1 of the present invention.
Fig. 2C is a system block diagram showing still another example of the hydrogen generation system in Embodiment 1 of the present invention.
Fig. 2D is a system block diagram showing still another example of the hydrogen generation system in Embodiment 1 of the present invention.
Fig. 2E is a system block diagram showing still another example of the hydrogen generation system in Embodiment 1 of the present invention.
Fig. 3A is a view showing a configuration example of a hydrogen generation unit of the hydrogen generation system in Embodiment 1 of the present invention.
Fig. 3B is a view showing another configuration example of the hydrogen generation unit of the hydrogen generation system in Embodiment 1 of the present invention.
Fig. 3C is a view showing still another configuration example of the hydrogen generation unit of the hydrogen generation system in Embodiment 1 of the present invention.
Fig. 4A is a system block diagram showing an example of a hydrogen generation system in Embodiment 2 of the present invention.
Fig. 4B is a system block diagram showing another example of the hydrogen generation system in Embodiment 2 of the present invention.
Fig. 4C is a system block diagram showing still another example of the hydrogen generation system in Embodiment 2 of the present invention.
Fig. 4D is a system block diagram showing still another example of the hydrogen generation system in Embodiment 2 of the present invention.
Fig. 5A is a system block diagram showing an example of a hydrogen generation system in Embodiment 3 of the present invention.
Fig. 5B is a system block diagram showing another example of the hydrogen generation system in Embodiment 3 of the present invention.
Fig. 5C is a system block diagram showing still another example of the hydrogen generation system in Embodiment 3 of the present invention.
Fig. 5D is a system block diagram showing still another example of the hydrogen generation system in Embodiment 3 of the present invention.
Fig. 6A is a system block diagram showing an example of a hydrogen generation system in Embodiment 4 of the present invention.
Fig. 6B is a system block diagram showing another example of the hydrogen generation system in Embodiment 4 of the present invention.
Fig. 6C is a system block diagram showing still another example of the hydrogen generation system in Embodiment 4 of the present invention.
Fig. 7A is a system block diagram showing an example of a hydrogen generation system in Embodiment 5 of the present invention.
Fig. 7B is a system block diagram showing another example of the hydrogen generation system in Embodiment 5 of the present invention.
Fig. 7C is a system block diagram showing still another example of the hydrogen generation system in Embodiment 5 of the present invention.
Fig. 8A is a system block diagram showing an example of a hydrogen generation system in Embodiment 6 of the present invention.
Fig. 8B is a system block diagram showing another example of the hydrogen generation system in Embodiment 6 of the present invention.
Fig. 8C is a system block diagram showing still another example of the hydrogen generation system in Embodiment 6 of the present invention.
Fig. 9A is a system block diagram showing an example of a hydrogen generation system in Embodiment 7 of the present invention.
Fig. 9B is a system block diagram showing another example of the hydrogen generation system in Embodiment 7 of the present invention.
Fig. 9C is a system block diagram showing still another example of the hydrogen generation system in Embodiment 7 of the present invention.
Fig. 10A is a system block diagram showing an example of a hydrogen generation system in Embodiment 8 of the present invention.
Fig. 10B is a system block diagram showing another example of the hydrogen generation system in Embodiment 8 of the present invention.
Fig. 11A is a system block diagram showing an example of a hydrogen generation system in Embodiment 9 of the present invention.
Fig. 11B is a system block diagram showing another example of the hydrogen generation system in Embodiment 9 of the present invention.
Fig. 11C is a system block diagram showing still another example of the hydrogen generation system in Embodiment 9 of the present invention.
Fig. 11D is a system block diagram showing still another example of the hydrogen generation system in Embodiment 9 of the present invention.
Fig. 11E is a system block diagram showing still another example of the hydrogen generation system in Embodiment 9 of the present invention.

### DESCRIPTION OF EMBODIMENTS

As an example of the hydrogen generation unit that constitutes the hydrogen generation system in the present invention, there is a device that has a semiconductor electrode including a semiconductor material capable of decomposing water into hydrogen and oxygen, and a counter electrode made of an electrically conductive material.

A semiconductor material that decomposes water into hydrogen and oxygen by irradiation with light is also called a "photocatalyst".

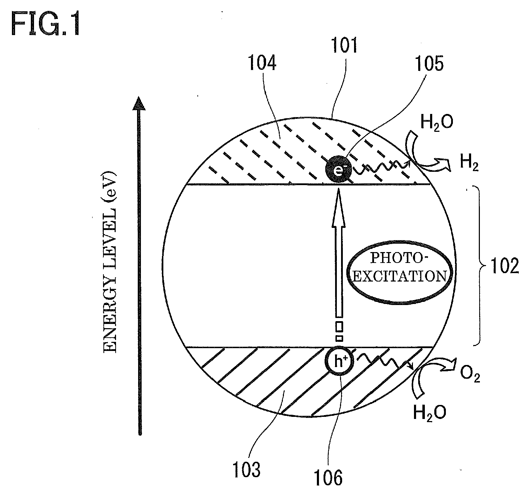

Hereinafter, the mechanism of water decomposition by a photocatalyst is described. Fig. 1 is a view showing the energy band of a photocatalyst 101.

When the photocatalyst 101 is irradiated with light having energy equal to or greater than that of a band gap 102, electrons 105 are excited from a valence band 103 to a conduction band 104, leaving holes 106 behind in the valence band 103.

The holes 106 thus generated cause water to be decomposed on the surface of the photocatalyst 101 according to the following reaction formula (1), so that oxygen is generated thereon.

Formula 1: 4h⁺+ 2H₂O → O_{2↑} + 4H⁺ (1)

On the other hand, the electrons 105 excited into the conduction band 104 cause water to be decomposed on the surface of the photocatalyst 101 according to the following reaction formula (2), so that hydrogen is generated thereon.

Formula 2: 4e⁻+ 4H⁺ → 2H_{2↑} (2)

At this time, when hydrogen and oxygen are generated at sites that are very close to each other, a reverse reaction expressed by the following reaction formula (3) occurs, which is a problem.

Formula 3: 2H₂ + O₂ → 2H₂O (3)

In order to solve this problem, the hydrogen generation unit that constitutes the hydrogen generation system in the present invention preferably has a structure provided with a semiconductor electrode and a counter electrode. Further, it is preferable that the semiconductor electrode and the counter electrode be connected electrically to each other with an external circuit. Generally in this configuration, when an n-type semiconductor is employed as a semiconductor material of which the semiconductor electrode is composed, the electrons 105 excited by the irradiation light move within the semiconductor electrode and then transfer into the counter electrode through the external circuit. Thereafter, they cause a reaction given by the reaction formula (2) on the surface of the counter electrode, so that hydrogen is generated thereon. On the other hand, the holes 106 generated due to the excitation of the electrons 105 cause a reaction given by the reaction formula (1) on the surface of the semiconductor electrode, so that oxygen is generated thereon.

Generally, when a p-type semiconductor is employed as a semiconductor material of which the semiconductor electrode is composed, the flow of the electrons in the circuit is reversed from that in the case of using the n-type semiconductor. That is, the reaction given by the reaction formula (2) is caused on the surface of the semiconductor electrode, so that hydrogen is generated thereon, while the reaction given by the reaction formula (1) is caused on the surface of the counter electrode, so that oxygen is generated thereon.

In such a configuration, the site where hydrogen is generated and the site where oxygen is generated are separated from each other, and therefore the reverse reaction given by the reaction formula (3) does not occur.

Further, in order to cause the reactions given by the above-mentioned reaction formulae (1) and (2) in such water decomposition, it is preferable that the level of the conduction band edge in Fig. 1 be equal to or lower than the hydrogen ion reduction potential (0 V, which is the hydrogen standard potential), as well as the level of the valence band edge be equal to or greater than the water oxidation potential (1.23 V, which is hydrogen standard potential). That is, in Fig. 1, the band gap 102 is preferably at least 1.23 eV The wavelength of the irradiation light is required to be about 1010 nm or less, in order to allow the electrons 105 to be excited and jump over the band gap 102. Accordingly, among the light energy included in sunlight, the light energy in the wavelength range of 1010 nm or more (light having an energy equal to or lower than the band gap energy) is desirably recovered as heat energy.

Further, the electrons 105 acquire energy corresponding to the wavelength of the absorbed light. Upon being excited, the electrons 105 relax to the bottom of the conduction band 104 at once.

Meanwhile, among the excited electrons 105, those that have failed to react with water on the surface of the photocatalyst 101 recombine with the holes 106.

Also in these relaxation process and recombination process, heat is generated. This heat is desirably recovered, as well.

Hereinafter, the embodiments of the present invention are described with reference to drawings. The following embodiments are described as an example and the present invention is not limited to these embodiments. Furthermore, in the following embodiments, the same parts are indicated with identical numerals and the same descriptions thereof may be omitted.

### Embodiment 1

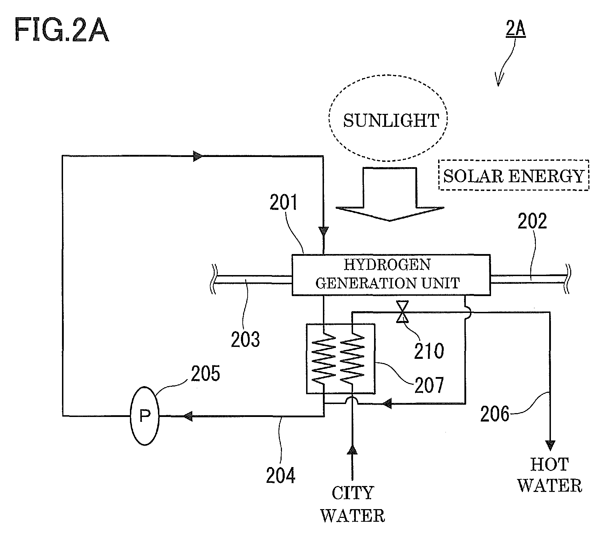

Fig. 2A to Fig. 2E show the respective configuration examples of the hydrogen generation system in Embodiment 1 of the present invention.

A hydrogen generation system 2A of this embodiment shown in Fig. 2A has a hydrogen generation unit 201, a heat exchanger 207 that performs heat exchange between water (first liquid) heated in the hydrogen generation unit 201 and water (second liquid) introduced therein through a water flow line 206 serving as another path, thereby cooling the former water (water serving as the first liquid) while heating the latter water (water serving as the second liquid), and a mechanism that introduces water cooled by the heat exchanger 207 again into the hydrogen generation unit 201. This mechanism includes a water path for introducing water cooled by the heat exchanger 207 again into the hydrogen generation unit 201, and a pump 205 for circulating water in this water path. This water path forms a part of a circulation line 204 that connects the hydrogen generation unit 201 and the heat exchanger 207 to each other. The pump 205 is provided on the circulation line 204. It should be noted that the circulation water (first liquid) flowing through the circulation line 204 and water to be heated flowing through the water flow line 206 (second liquid) would never be mixed with each other in the heat exchanger 207, between which only heat exchange is performed. In this embodiment, although water is used as the first liquid flowing through the circulation line 204, the first liquid is not limited to normal water. Examples thereof include mixtures of water with materials other than water and aqueous solutions.

The hydrogen generation unit 201 allows water to be decomposed due to a photocatalytic reaction by being irradiated with sunlight, so that hydrogen and oxygen are generated while water is heated by sunlight. The hydrogen generation unit 201 is provided with a hydrogen outlet tube 202 and an oxygen outlet tube 203 for leading hydrogen gas and oxygen gas generated due to water decomposition inside the hydrogen generation unit 201 to the outside of the hydrogen generation unit 201.

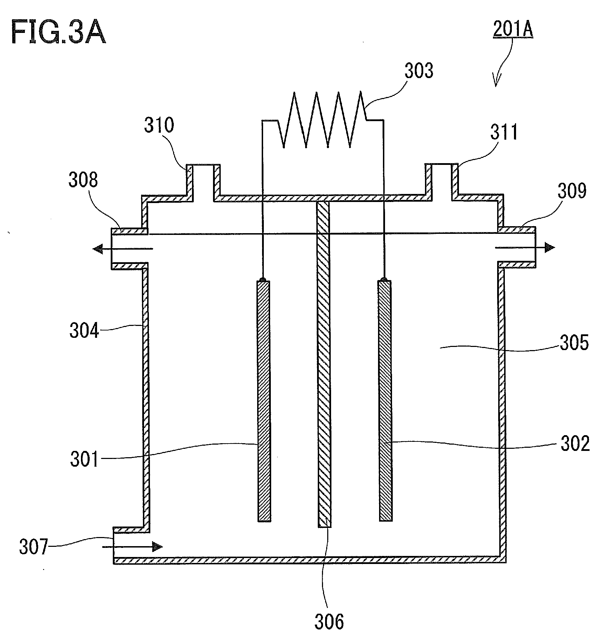

The hydrogen generation unit 201 is constituted by at least a semiconductor electrode and a counter electrode, and has a structure in which water to be supplied to the hydrogen generation unit 201 is separated into the semiconductor electrode side and the counter electrode side. The hydrogen generation unit 201 of this embodiment, though specific examples thereof are described later using Fig. 3A to Fig. 3C, is provided with a semiconductor electrode including a semiconductor material capable of decomposing water into hydrogen and oxygen, a counter electrode that is made of an electrically conductive material and is connected electrically to the semiconductor electrode, a first liquid (which herein is circulation water in the circulation line 204) in contact with the semiconductor electrode and the counter electrode, and a housing that accommodates the semiconductor electrode, the counter electrode, and the first liquid thereinside. The hydrogen generation unit 201 has a configuration in which a part of water contained in the first liquid is decomposed into hydrogen and oxygen by the semiconductor electrode being irradiated with sunlight, which causes hydrogen to be generated.

In this embodiment, a configuration in which the oxygen outlet tube 203 is provided on the side of the semiconductor electrode that constitutes the hydrogen generation unit 201 while the hydrogen outlet tube 202 is provided on the side of the counter electrode that constitutes the hydrogen generation unit 201 is described as an example, which however is not restrictive. Corresponding to the direction in which electrons flow between the semiconductor electrode and the counter electrode that constitute the hydrogen generation unit 201, the installation positions of the hydrogen outlet tube 201 and the oxygen outlet tube 202 can be decided. Accordingly, the hydrogen outlet tube 202 may be provided on the semiconductor electrode side while the oxygen outlet tube 203 may be provided on the counter electrode side, depending on the flow direction of electrons between the semiconductor electrode and the counter electrode that constitute the hydrogen generation unit 201.

In the hydrogen generation system 2A, the circulation water driven to flow through the circulation line 204 by the power of the pump 205 is branched into a water stream flowing on the semiconductor electrode side and a water stream flowing on the counter electrode side, inside the hydrogen generation unit 201. Hydrogen gas and oxygen gas generated by sunlight irradiation are led to the outside of the hydrogen generation unit 201 through the hydrogen outlet tube 202 and the oxygen outlet tube 203, respectively. Simultaneously, the circulation water is heated by sunlight, and then is subjected to heat exchange with water flowing through the water flow line 206 in the heat exchanger 207. Thereafter, the circulation water is led through the circulation line 204, and is again supplied to the hydrogen generation unit 201. In the case where the circulation water becomes reduced, additional water may be appropriately supplied from the outside.

Water flowing through the water flow line 206 receives heat from circulation water flowing through the circulation line 204 in the heat exchanger 207, thereby becoming hot water. For example, it is possible to employ a configuration in which a valve 210 is provided on the water flow line 206 so that hot water can be taken out, when necessary, by opening and closing this valve.

In order to suppress heat energy loss, the hydrogen generation unit 201 and the heat exchanger 207 are preferably provided adjacent to each other. It is preferable that the water pipe between the hydrogen generation unit 201 and the heat exchanger 207 be thermally insulated from the outside air so as to have a structure that prevents the water temperature from decreasing.

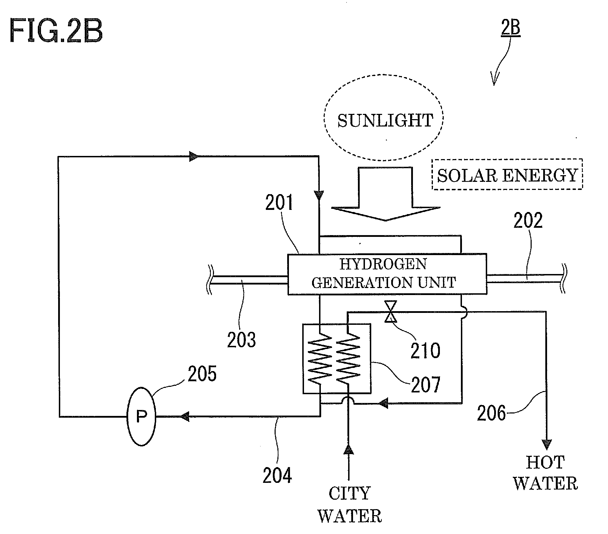

The branching of the circulation line 204 for allowing water to flow separately into the semiconductor electrode side and the counter electrode side in the hydrogen generation unit 201 is not necessarily performed within the hydrogen generation unit 201. As in a hydrogen generation system 2B shown in Fig. 2B as another example of this embodiment, a structure in which the circulation line 204 is branched before being introduced into the hydrogen generation unit 201 may be employed.

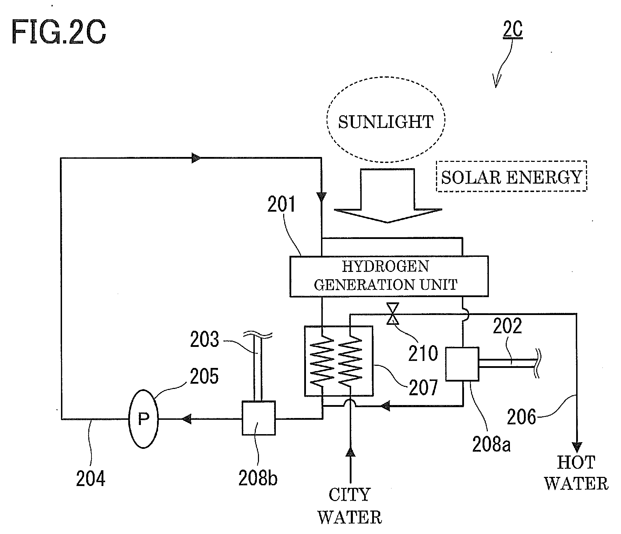

Hydrogen gas and the oxygen gas generated in the hydrogen generation unit 201 each are not necessarily led to the outside from the hydrogen generation unit 201 in an individually separated state. As in a hydrogen generation system 2C shown in Fig. 2C as still another example of this embodiment, it also is possible to employ a configuration in which hydrogen gas and oxygen gas generated by sunlight irradiation are delivered to the outside of the hydrogen generation unit 201 together with the circulation water. The circulation water, which constitutes the hydrogen generation unit 201, containing hydrogen led to the outside from the side of an electrode without sunlight irradiation (counter electrode side) is then introduced into a gas-liquid separation apparatus 208a so as to be separated into liquid and gas. The gas separated from the liquid is led to the outside from the circulation line 204 through the hydrogen outlet tube 202. On the other hand, the circulation water, which constitutes the hydrogen generation unit 201, containing oxygen led to the outside from the side of an electrode with sunlight irradiation (semiconductor electrode side) is then introduced into the heat exchanger 207, and is subjected to heat exchange with water flowing through the water flow line 206. The circulation water discharged from the heat exchanger 207 merges with the circulation water that has flowed through the other electrode side, and then is introduced into a gas-liquid separation apparatus 208b so as to be separated into liquid and gas. The separated gas is led to the outside from the circulation water through the oxygen outlet tube 203. Thereafter, the circulation water is led through the circulation line 204, and is again supplied to the hydrogen generation unit 201. In this description, an example where hydrogen is contained in the circulation water led to the outside from the counter electrode side while oxygen is contained in the circulation water led to the outside from the semiconductor electrode side is mentioned. However, depending on the flow direction of electrons between the semiconductor electrode and the counter electrode that constitute the hydrogen generation unit 201, there also is a case where hydrogen is generated from the semiconductor electrode side while oxygen is generated from the counter electrode side. Thus, the configuration is not necessarily limited to one in which hydrogen is contained in the circulation water led to the outside from the counter electrode side and oxygen is contained in the circulation water led to the outside from the semiconductor electrode side. Depending on the flow direction of electrons between the semiconductor electrode and the counter electrode that constitute the hydrogen generation unit 201, hydrogen may be contained in the circulation water on the semiconductor electrode side, and oxygen may be contained in the circulation water on the counter electrode side. In such a case, the gas separated in the gas-liquid separation apparatus 208a is oxygen, and the gas separated in the gas-liquid separation apparatus 208b is hydrogen. Accordingly, the installation positions of the hydrogen outlet tube 202 and the oxygen outlet tube 203 are replaced with each other.

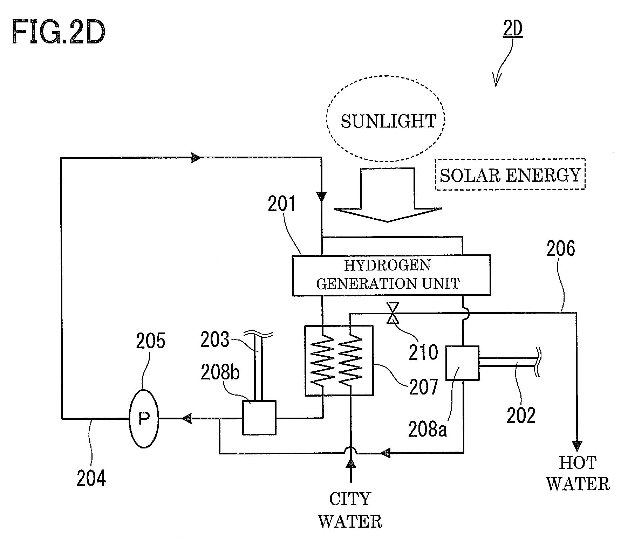

It should be noted that the water streams that have flowed through the semiconductor electrode side and the counter electrode side may be merged together at a point after the water on the semiconductor electrode side has passed through the gas-liquid separation apparatus 208b and the water on the counter electrode side has passed through the gas-liquid separation apparatus 208a, as in a hydrogen generation system 2D shown in Fig. 2D.

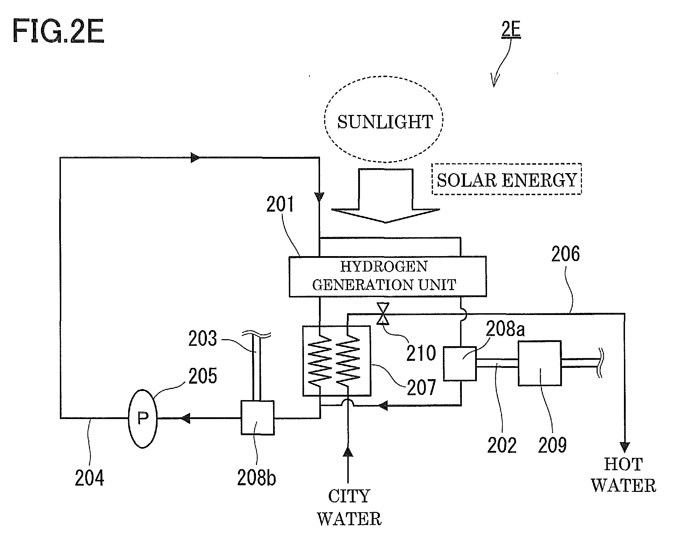

Further, the hydrogen generation system of this embodiment may have a configuration in which a storage unit 209 for storing hydrogen gas is further provided on the hydrogen outlet tube 202, as in a hydrogen generation system 2E shown in Fig. 2E. Hydrogen generated during the daytime can be used also during the night by providing the storage unit 209.

In any of configurations shown in Fig. 2A to Fig. 2D, the storage unit 209 can be provided.

Furthermore, the storage unit 209 is desirably accompanied by a gas compression mechanism. Although a tank-like container also can be used as the storage unit 209, a storage unit made of hydrogen storage alloy may be used in the case of storing hydrogen. A unit (dehumidifier) for drying hydrogen also may be provided before hydrogen is introduced into the storage unit 209, as needed.

Moreover, the circulation line 204 may be provided with a water inlet port for adjusting the water volume inside thereof.

Hereinafter, the configuration examples of the hydrogen generation unit 201 are described. However, the hydrogen generation system in the present invention is not limited to the respective configuration examples of the hydrogen generation unit 201 mentioned below.

### Configuration Example 1

Fig. 3A shows a hydrogen generation unit 201A as a configuration example of the hydrogen generation unit 201. The hydrogen generation unit 201A is a configuration to be used suitably for the hydrogen generation system 2A shown in Fig. 2A. The hydrogen generation unit 201A has a semiconductor electrode 301 constituted by disposing a semiconductor material that is a photocatalyst on a conductive substrate, a counter electrode (a counter electrode made of a conductive material such as metal and carbon, or a counter electrode having a structure that allows metal to be supported on a conductive base) 302 made of an electrically conductive material, and an external circuit 303 that connects the semiconductor electrode 301 and the counter electrode 302 to each other. The semiconductor that constitutes the semiconductor electrode 301 is not necessarily a single-phase semiconductor, and may be a complex composed of a plurality of types of semiconductors. The semiconductor electrode 301 and the counter electrode 302 are in contact with a circulation water 305 that serves as a first liquid. The semiconductor electrode 301, the counter electrode 302, and the circulation water 305 are accommodated in a housing 304.

Further, a mechanism (not shown) that allows a bias to be applied between the semiconductor electrode 301 and the counter electrode 302 may be provided.

The circulation water 305 to be subjected to decomposition in the hydrogen generation unit 201A is circulated inside the housing 304. The circulation water 305 flows inside the circulation line 204 when flowing outside the hydrogen generation unit 201A. The circulation water 305 is permitted to contain a support electrolyte, a redox material, a sacrificial reagent, and the like.

Apart of the surface of the housing 304 on the semiconductor electrode 301 side is composed of a member that allows sunlight to be transmitted therethrough.

The semiconductor electrode 301 and the counter electrode 302 are separated from each other by a separator 306. It is preferable that the separator 306 be made of a material that is permeable to liquids and ions contained in the liquids, but blocks gases. The inside of the hydrogen generation unit 201A is separated by the separator 306 into a region on the semiconductor electrode 301 side and a region on the counter electrode 302 side, so that hydrogen gas and oxygen gas generated therein can be prevented from being mixed with each other. In the hydrogen generation unit 201A, the semiconductor electrode 301 side and the counter electrode 302 side are not completely separated by the separator 306, and a water flow path is provided at a low position. Since gases rise to a higher elevation, it is possible to prevent the gases from being mixed by providing the flow path at such a low position. Further, this structure enables the circulation water 305 to be smoothly supplied through one water inlet port 307 to both the semiconductor electrode 301 side and the counter electrode 302 side. The water inlet port 307 may be provided on either the semiconductor electrode side or the counter electrode side.

The circulation water 305 is introduced into the hydrogen generation unit 201A through the water inlet port 307. When the semiconductor that constitutes the semiconductor electrode 301 is an n-type semiconductor, the circulation water 305 that has flowed into the semiconductor electrode 301 side is subjected to a reaction given by the above-mentioned reaction formula (1) on the electrode that is irradiated with sunlight, so that oxygen is generated thereon. On the other hand, excited electrons are conducted through the external circuit 303 to cause a reaction given by the above-mentioned reaction formula (2) on the counter electrode 302, so that hydrogen is generated thereon. Meanwhile, the circulation water 305 is heated by light that has not been absorbed by the semiconductor electrode 301, particularly infrared light, or heat energy released by the semiconductor electrode 301 when the semiconductor electrode 301 has once absorbed light but failed to use the light for the chemical reactions of the reaction formulae (1) and (2).

A part of the circulation water 305 that has flowed on the semiconductor electrode 301 side is discharged to the outside of the hydrogen generation unit 201 through a water outlet port 308 on the semiconductor electrode 301 side. Meanwhile, the other part thereof that has flowed on the counter electrode 302 side is discharged through a water outlet port 309 on the counter electrode 302 side. Oxygen and hydrogen generated on the semiconductor electrode 301 and the counter electrode 302 through the reactions according to the reaction formulae (1) and (2) are discharged to the outside of the hydrogen generation unit 201 through an oxygen gas outlet port 310 and a hydrogen gas outlet port 311, respectively.

The circulation water 305 discharged through the water outlet port 308 on the semiconductor electrode 301 side and heated by sunlight is introduced into the heat exchanger 207 shown in Fig. 2A, passing through the circulation line 204. In the heat exchanger 207, heat exchange is performed between the circulation water 305 used for water decomposition and a second liquid (which herein is water) flowing through the water flow line 206 to be used for accumulating the heat. Thus, chemical substances such as a support electrolyte, a redox material, and a sacrificial reagent would never be incorporated into the liquid to be used for accumulating the heat. Accordingly, it is possible to adjust the property of the circulation water 305 that serves as the first liquid to the optimum one for water decomposition and also to utilize the second liquid that has accumulated the heat, as it is, for daily use. After the heat exchange in the heat exchanger 207, two lines of water streams discharged to the outside of the hydrogen generation unit 201A through the water outlet port 308 on the semiconductor electrode 301 side and the water outlet port 309 on the counter electrode 302 side are merged together and supplied to the hydrogen generation unit 201A again.

The water streams discharged through the water outlet port 308 on the semiconductor electrode 301 side and the water outlet port 309 on the counter electrode 302 side may be merged on either the upstream side or the downstream side of the heat exchanger 207. However, it is preferable that the water stream discharged through the water outlet port 308 on the semiconductor electrode 301 side, after having passed through the heat exchanger 207, be merged with the water stream discharged through the water outlet port 309 on the counter electrode 302 side, as shown in Fig. 2A. This is because, if the two water streams are merged on the upstream side of the heat exchanger 207, a part of heat energy of sunlight accumulated in the water stream discharged through the water outlet port 308 on the semiconductor electrode 301 side is lost.

### Configuration Example 2

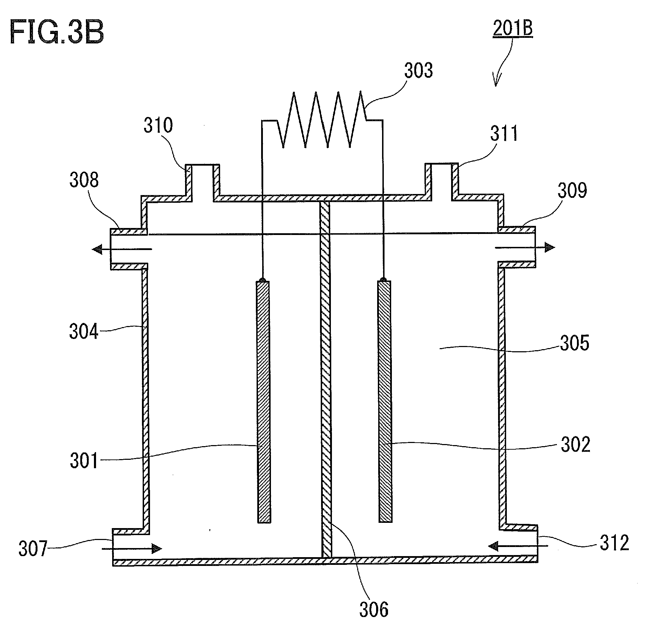

Fig. 3B shows a hydrogen generation unit 201B as another configuration example of the hydrogen generation unit 201. The hydrogen generation unit 201B is a configuration to be used suitably for the hydrogen generation system 2B shown in Fig. 2B. In Fig. 3B, the same components as in Fig. 3A are indicated with identical reference numerals, and the descriptions thereof are omitted.

In the hydrogen generation unit 201B, a region on the semiconductor electrode 301 side and a region on the counter electrode 302 side are completely separated by the separator 306. Water inlet ports 307 and 312 are provided respectively on the semiconductor electrode 301 side and the counter electrode 302 side.

Further, a mechanism (not shown) that allows a bias to be applied between the semiconductor electrode 301 and the counter electrode 302 may be provided.

Accordingly, in the configuration of the hydrogen generation unit 201B, the circulation line 204 is required to be branched as shown in Fig. 2B so as to provide water channels for both the semiconductor electrode 301 side and the counter electrode 302 side. Such a structure as the hydrogen generation unit 201B can prevent the mixing of generated oxygen and hydrogen more surely, thereby preventing hydrogen explosion further surely as well as preventing the reverse reaction of the above-mentioned reaction formula (3).

The streams of the circulation water 305 introduced through the water inlet ports 307 and 312 allows oxygen and hydrogen to be generated respectively on the semiconductor electrode 301 and the counter electrode 302 due to the reactions of the reaction formulae (1) and (2), and is thereafter discharged through the water outlet ports 308 and 309.

The process after the discharge is the same as in the hydrogen generation unit 201A described in Configuration Example 1, and thus the description thereof is omitted.

### Configuration Example 3

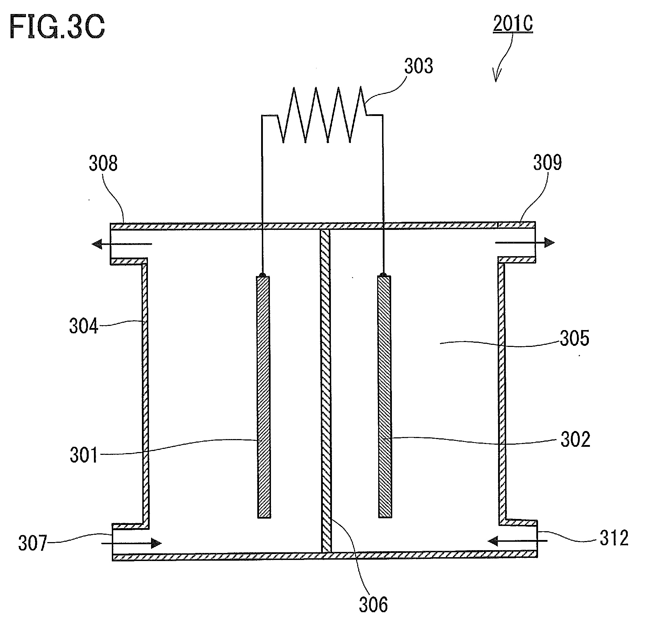

Fig. 3C shows a hydrogen generation unit 201C as still another configuration example of the hydrogen generation unit 201. The hydrogen generation unit 201C is a configuration to be used suitably for the hydrogen generation systems 2C to 2E shown in Figs. 2C to 2E. In Fig. 3C, the same components as in Fig. 3A and Fig. 3B are indicated with identical reference numerals, and the descriptions thereof are omitted.

The hydrogen generation unit 201C has a configuration in which the oxygen outlet tube and the hydrogen outlet tube are not provided thereinside. Oxygen and hydrogen generated on the semiconductor electrode 301 and the counter electrode 302 are discharged together with the circulation water 305 respectively through the water outlet port 308 on the semiconductor electrode 301 side and the water outlet port 309 on the counter electrode 302 side.

The discharged mixtures of the circulation water 305 and each gas are introduced respectively into the gas-liquid separation apparatuses 208a and 208b, as shown in Figs. 2C to 2E, so as to be separated into gas and liquid. The separated gases are led to the outside respectively through the hydrogen outlet tube 202 and the oxygen outlet tube 203. Any separation method, such as heating, sieving, ultrasonic, stirring, centrifugation, can be employed, and a plurality of the gas-liquid separation apparatuses may be arranged in series so as to ensure separation.

It is desirable that water and hydrogen discharged through the water outlet port 309 on the counter electrode 302 side are separated before merging with the water stream discharged through the water outlet port 308 on the semiconductor electrode 301 side, as in the configurations shown in Fig. 2C and Fig. 2E.

On the other hand, in the flow path of water discharged through the water outlet port 308 on the semiconductor electrode 301 side, it is preferable to provide the gas-liquid separation apparatus 208b after the heat exchange in the heat exchanger 207, as in the hydrogen generation systems 2C to 2E, in order to suppress the heat loss as much as possible, though it also is acceptable to provide it before the heat exchange. Particularly, in order to completely eliminate excess residual gas from the water circulation line 204, it is desirable to provide the gas-liquid separation apparatus 208b after the merging with water discharged through the water outlet port 309 on the counter electrode 302 side, as in the hydrogen generation systems 2C and 2E.

It also is possible to provide gas-liquid separation apparatuses both before and after the merging.

### Embodiment 2

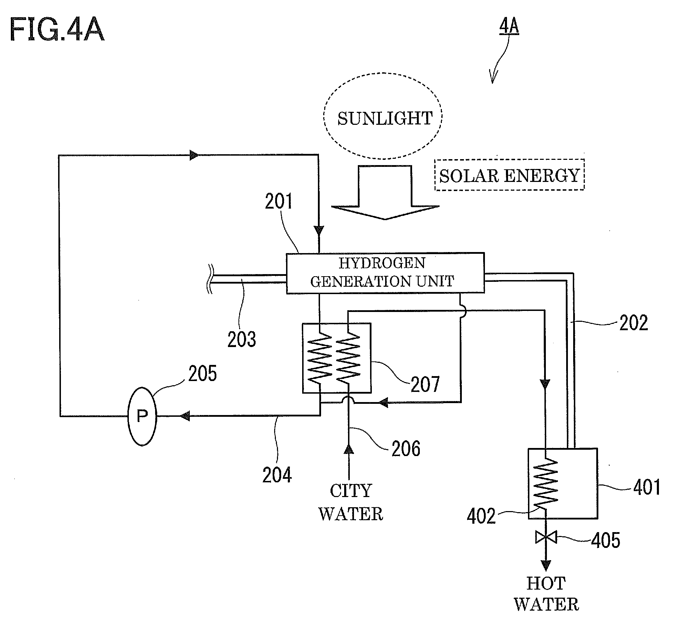

Fig. 4A to Fig. 4D show the respective configuration examples of the hydrogen generation system in Embodiment 2 of the present invention. In Fig. 4A to Fig. 4D, the same components as in Fig. 2A to Fig. 2E are indicated with identical reference numerals, and the descriptions thereof are omitted. It should be noted that the configuration of the hydrogen generation unit 201 is not limited to the configuration shown in Embodiment 1.

A hydrogen generation system 4A shown in Fig. 4A has a configuration in which a fuel cell 401 is further incorporated in the hydrogen generation systems 2A to 2E of Embodiment 1, the hydrogen outlet tube 202 for leading hydrogen generated in the hydrogen generation unit 201 to the outside is connected to the fuel cell 401, and the water flow line 206 that has been subjected to heat exchange with the circulation line 204 in the heat exchanger 207 and thus has been heated is led through the fuel cell 401. In this embodiment, a mechanism for supplying hydrogen generated in the hydrogen generation unit 201 to the fuel cell 401 is achieved by the hydrogen outlet tube 202 connected to the fuel cell 401. Such a configuration makes it possible to further heat the liquid that has been heated in the heat exchanger 207 and flowed through the water flow line 206 by a heat exchanger (second heat exchanger) 402 provided inside the fuel cell 401 as well as to convert hydrogen generated in the hydrogen generation unit 201 into electrical energy.

Fuel cells of any power generation types, such as solid polymer type, solid oxide type, and phosphoric acid type, can be used as the fuel cell 401.

When hydrogen and oxygen react with each other in the fuel cell 401, the reaction energy is released as heat at the same time as electrical energy and water are generated. Further, Joule heat derived from the generated current and internal resistance also is generated in the fuel cell 401. By recovering and utilizing these reaction energy and Joule heat, significantly efficient energy use can be achieved, as compared to the case of recovering and utilizing only the heat energy absorbed in the hydrogen generation unit 201.

In addition, a storage unit may be provided on each of the hydrogen outlet tube 202 and the oxygen outlet tube 203, as needed. The storage unit is desirably accompanied by a gas compression mechanism. Although a tank-like container also can be used as the storage unit, a storage unit made of hydrogen storage alloy may be used in the case of storing hydrogen. Moreover, the circulation line 204 may be provided with a water inlet port for adjusting the water volume inside thereof.

A valve 405 may be provided on the water flow line 206, for example, at a portion after being heated by the fuel cell 401. Hot water can be obtained, when necessary, by opening and closing this valve 405.

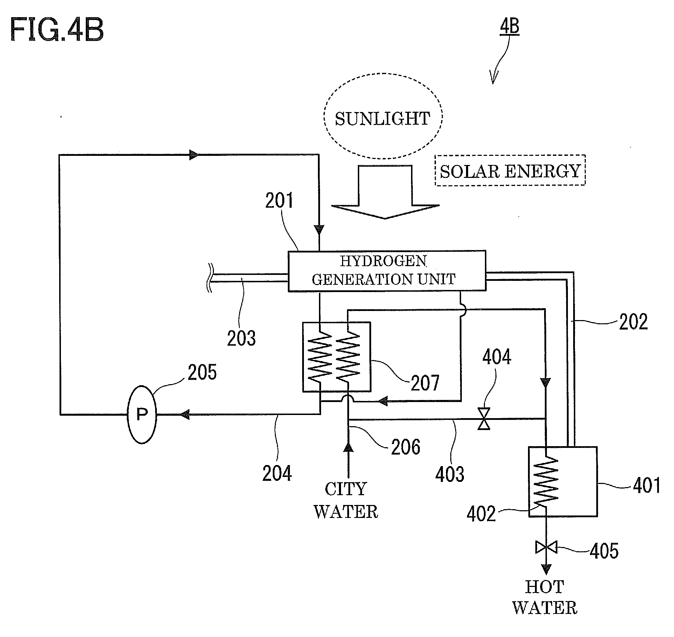

As in a hydrogen generation system 4B shown in Fig. 4B as another example of this embodiment, it is possible to employ a structure provided with a bypass line 403 that allows water flowing through the water flow line 206 before being subjected to heat exchange in the heat exchanger 207 to merge with the water flow line 206 again without passing through the heat exchanger 207 at a point between the heat exchanger 207 and the fuel cell 401. Since the bypass line 403 is used on an as-needed basis, a valve 404 is provided thereon.

Conventional fuel cells have a problem that when the temperature of their stack portion becomes unstable, the performance of the fuel cells also becomes unstable. Also in the present invention, it is a problem that the performance of the fuel cell 401 is made unstable by variation in the temperature of the liquid that has been heated in the heat exchanger 207 and is flowing through the water flow line 206. In contrast, according to the configuration of the hydrogen generation system 4B, it is possible to adjust the temperature of water to be introduced into the fuel cell 401 using cold water by opening the valve 404 when the temperature of the water that has been subjected to heat exchange in the heat exchanger 207 is excessively high.

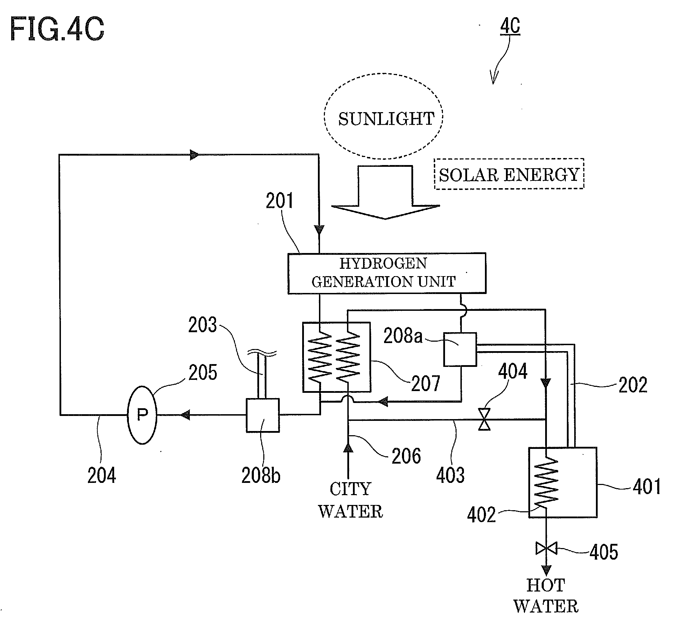

As in a hydrogen generation system 4C shown in Fig. 4C as another example of this embodiment, it is possible to employ a configuration in which hydrogen and oxygen are separated from water not in the hydrogen generation unit 201, but respectively in the gas-liquid separation apparatuses 208a and 208b that are separately provided, after being led to the outside together with water flows.

The hydrogen generation system 4C may be provided with or without the bypass line 403 and the valve 404.

The gas-liquid separation apparatuses 208a and 208b can be provided in the same manner as in Embodiment 1, and thus the description thereof is omitted.

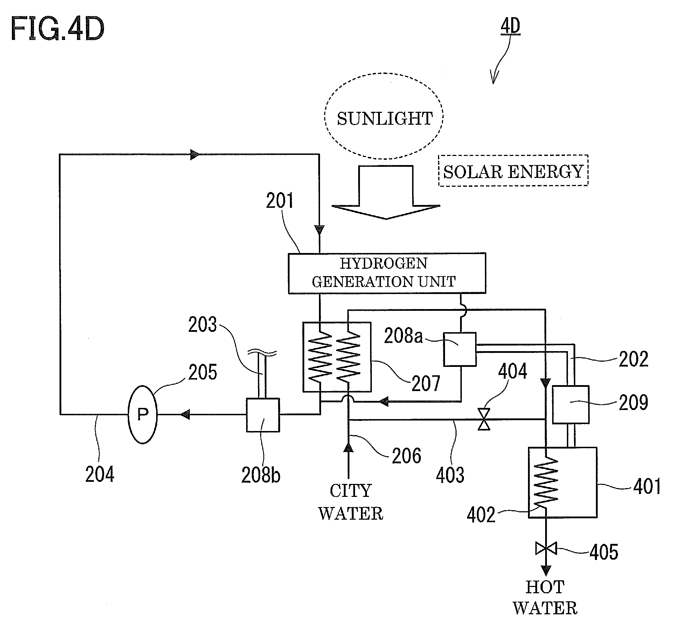

As in a hydrogen generation system 4D shown in Fig. 4D as another example of this embodiment, the storage unit 209 may be provided on the hydrogen outlet tube 202. The storage unit 209 is desirably accompanied by a gas compression mechanism. Although a tank-like container also can be used as the storage unit 209, a storage unit made of hydrogen storage alloy may be used in the case of storing hydrogen. A unit (dehumidifier) for drying hydrogen also may be provided before hydrogen is introduced into the storage unit 209, as needed.

Conventionally, hydrogen cannot be generated during the time when the hydrogen generation unit 201 is not irradiated with sunlight. However, according to the configuration of the hydrogen generation system 4D, hydrogen can be supplied to the fuel cell 401 even during the time without the irradiation, by storing hydrogen in the storage unit 209 during the time when the hydrogen generation unit 201 is irradiated with sunlight.

Although the bypass line 403 and the valve 404 are provided in the hydrogen generation system 4D, these are not necessarily provided. Further, the separation of hydrogen and oxygen is performed respectively in the gas-liquid separation apparatuses 208a and 208b that are provided outside the hydrogen generation unit 201, in the hydrogen generation system 4D. However, it may be performed within the hydrogen generation unit 201, as in the hydrogen generation systems 4A and 4B.

### Embodiment 3

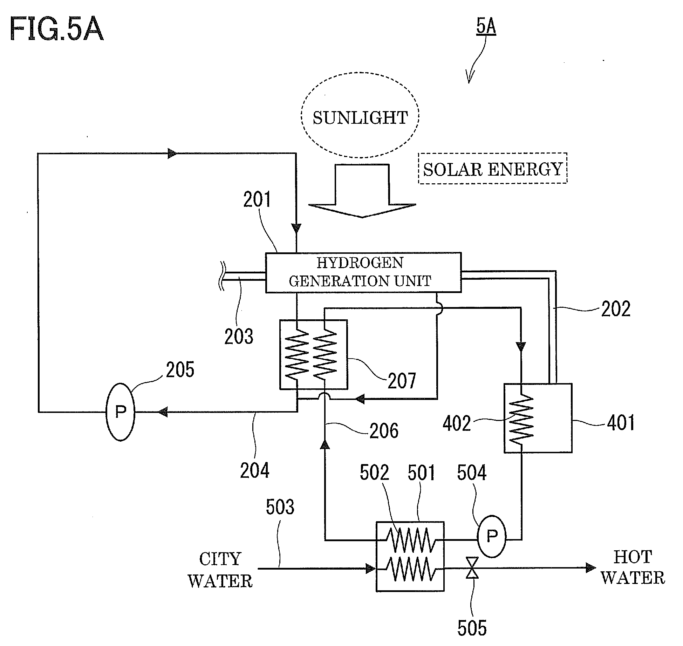

Fig. 5A to Fig. 5D show the respective configuration examples of the hydrogen generation system in Embodiment 3 of the present invention. In Fig. 5A to Fig. 5D, the same components as in Fig. 2A to Fig. 2E and Fig. 4A to Fig. 4D are indicated with identical reference numerals, and the descriptions thereof are omitted. It should be noted that the configuration of the hydrogen generation unit 201 is not limited to the configuration shown in Embodiment 1.

A hydrogen generation system 5A shown in Fig. 5A has a configuration in which a hot water storage tank 501 for storing hot water obtained by recovering heat generated in the fuel cell 401 and heat generated in the hydrogen generation unit 201 is further provided in the configurations of the hydrogen generation systems of Embodiment 1 and Embodiment 2. The hydrogen generation system 5A has a configuration of accumulating the heat obtained in the heat exchanger (first heat exchanger) 207 and the heat exchanger (second heat exchanger) 402 provided in the fuel cell 401, by heat exchange with a liquid (third liquid) that has flowed through a water flow line 503 in a heat exchanger (third heat exchanger) 502 provided in the hot water storage tank 501. At this time, the heat obtained in the heat exchangers 207 and 402 is delivered by the liquid (second liquid) flowing through the water flow line 206. The water flow line 206 forms a circulation line that allows the liquid, after being subjected to heat exchange with the water flow line 503 in the heat exchanger 502 provided in the hot water storage tank 501, to be circulated again into the heat exchanger 207.

The water flow line 206 is further provided with a pump 504 for circulating water. The liquid flowing through the water flow line 206 is preferably pure water in order to prevent the corrosion of the fuel cell 401. However, a liquid such as an antifreeze solution also may be used. The hot water stored in the hot water storage tank 501 is distributed through the water flow line 503, for example, by providing a valve 505 on the water flow line 503, and opening and closing the valve 505, when necessary.

According to the configuration of the hydrogen generation system 5A, it is possible to solve the conventional problem of a failure to stably supply hot water during the time when the hydrogen generation unit 201 has sunlight irradiation for a reduced time, such as during the night, inclement weather, and winter season.

That is, the configuration provided with the hot water storage tank 501 allows heat generated in the hydrogen generation unit 201 and the fuel cell 401 during the sunlight irradiation time to be accumulated once in the hot water storage tank 501, thus enabling hot water to be supplied stably during the time when the sunlight irradiation time is reduced, such as during the night, inclement weather, and winter season.

The hot water storage tank 501 is desirably covered with a heat insulator, and the like.

Further, a storage unit may be provided on each of the hydrogen outlet tube 202 and the oxygen outlet tube 203, as needed. The storage unit is desirably accompanied by a gas compression mechanism. Although a tank-like container also can be used as the storage unit, a storage unit made of hydrogen storage alloy may be used in the case of storing hydrogen. A unit (dehumidifier) for drying hydrogen or oxygen also may be provided before hydrogen or oxygen is introduced into the storage unit, as needed.

Moreover, the circulation line 204 may be provided with a water inlet port for adjusting the water volume inside thereof.

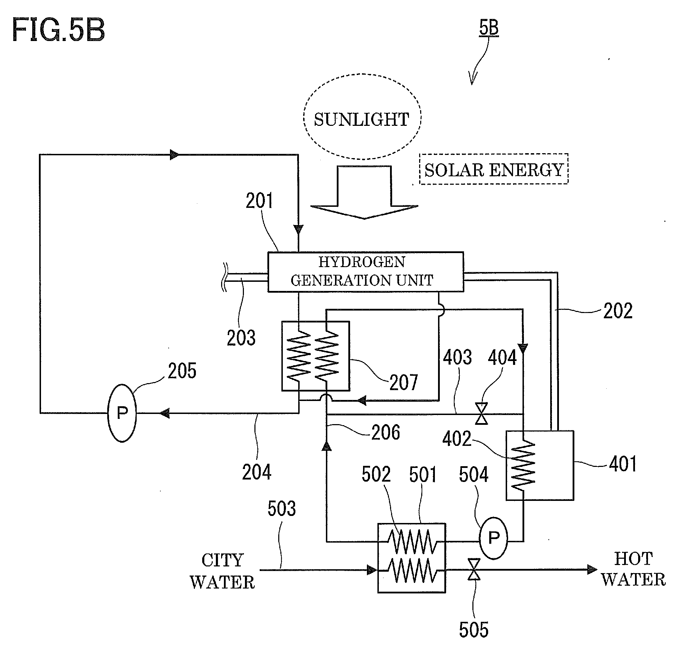

As in a hydrogen generation system 5B shown in Fig. 5B as another example of this embodiment, it also is possible to employ a configuration in which the bypass line 403 and the valve 404 are provided on the water flow line 206 in addition to the configuration of the hydrogen generation system 5A, in the same manner as in the hydrogen generation system 4B of Embodiment 2.

As has been described in Embodiment 2, conventional fuel cells have a problem that when the temperature of their stack portion becomes unstable, the performance of the fuel cells also becomes unstable. Also in the present invention, it is a problem that the performance of the fuel cell 401 is made unstable by variation in the temperature of the liquid that has been heated in the heat exchanger 207 and is flowing through the water flow line 206. According to this structure, it is possible to adjust the temperature of water to be introduced into the fuel cell 401 using cold water by opening the valve 404 when the temperature of the water that has been subjected to heat exchange in the heat exchanger 207 is excessively high.

The cold water to be used for adjusting the temperature of water to be introduced into the fuel cell 401 is not necessarily supplied by providing the bypass line 403 on the water flow line 206, and may be supplied, for example, by providing a mechanism for introducing city water.

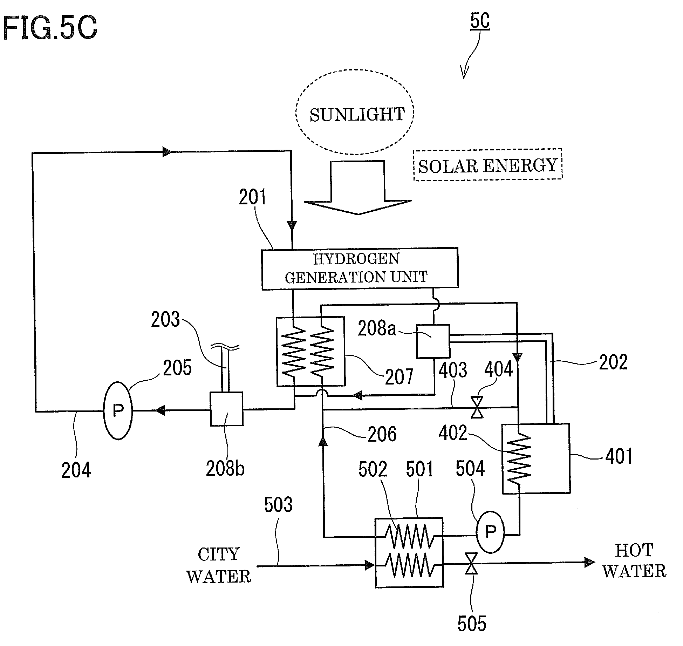

A hydrogen generation system 5C shown in Fig. 5C as another example of this embodiment has a configuration in which hydrogen and oxygen are separated from water not in the hydrogen generation unit 201, but respectively in the gas-liquid separation apparatuses 208a and 208b, after hydrogen and oxygen are led to the outside together with water flows, in the hydrogen generation system 5B.

Also in the hydrogen generation system 5C, the bypass line 403 and the valve 404 are provided, which, however, are not necessarily provided.

The gas-liquid separation apparatuses 208a and 208b can be provided in the same manner as in Embodiment 1, and thus the description thereof is omitted.

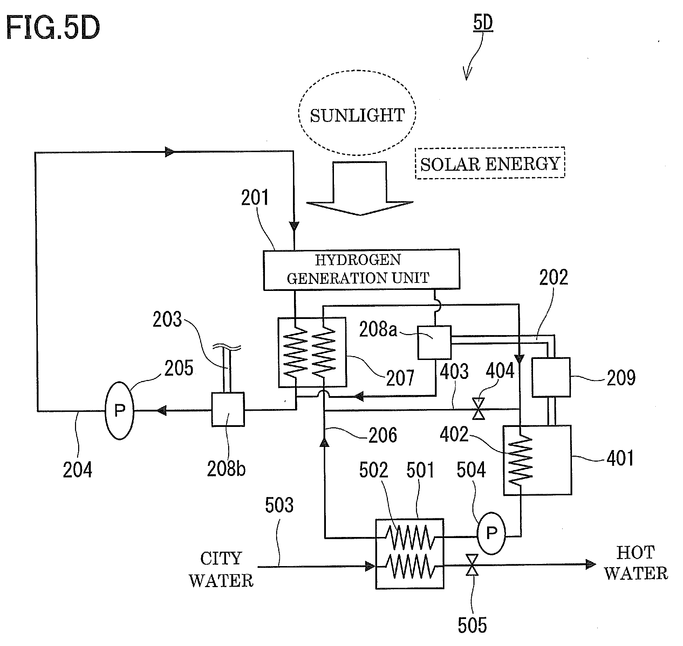

A hydrogen generation system 5D shown in Fig. 5D as another example of this embodiment has a configuration in which the storage unit 209 is further provided on the hydrogen outlet tube 202, in the hydrogen generation system 5C. The storage unit 209 is desirably accompanied by a gas compression mechanism. Although a tank-like container also can be used as the storage unit 209, a storage unit made of hydrogen storage alloy may be used in the case of storing hydrogen. A unit (dehumidifier) for drying hydrogen also may be provided before hydrogen is introduced into the storage unit 209, as needed.

Conventionally, hydrogen cannot be generated during the time when the hydrogen generation unit 201 is not irradiated with sunlight. However, according to the hydrogen generation system 5D, hydrogen can be supplied to the fuel cell 401 even during the time without the irradiation, by storing hydrogen in the storage unit 209 during the time when the hydrogen generation unit 201 is irradiated with sunlight.

Also in the hydrogen generation system 5D, the bypass line 403 and the valve 404 are provided, which, however, are not necessarily provided.

### Embodiment 4

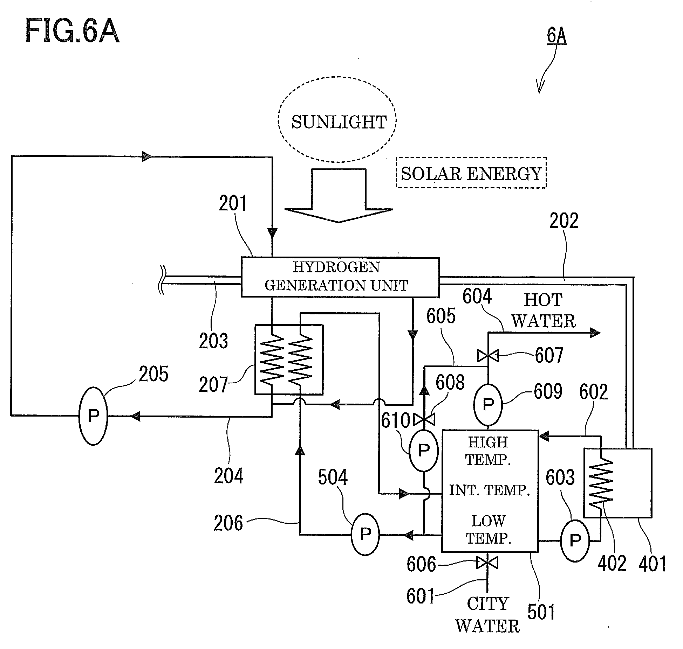

Fig. 6A to Fig. 6C show the respective configuration examples of the hydrogen generation system in Embodiment 4 of the present invention. In Fig. 6A to Fig. 6C, the same components as in Fig. 2A to Fig. 2E, Fig. 4A to Fig. 4D, and Fig. 5A to Fig. 5D are indicated with identical reference numerals, and the descriptions thereof are omitted.

A hydrogen generation system 6A shown in Fig. 6A has a configuration in which the fuel cell 401 and the hot water storage tank 501 are further provided in the hydrogen generation system of Embodiment 1, in the same manner as in the hydrogen generation system of Embodiment 3. However, the relationships of the water flow line 206, the fuel cell 401, and the hot water storage tank 501 in the hydrogen generation system 6A are different from those in the hydrogen generation system of Embodiment 3.

In the hydrogen generation system 6A shown in Fig. 6A, water flowing through the water flow line 206 to be subjected to heat exchange with the circulation line 204 in the heat exchanger 207 is supplied from the portion of low water temperature range of the hot water storage tank 501, then is subjected to heat exchange with the circulation line 204 in the heat exchanger 207, and thereafter is supplied to the portion of intermediate temperature range of the hot water storage tank 501. Water flowing through the water flow line 206 is circulated by the power of the pump 504 provided on the water flow line 206. City water is preferably introduced into the low temperature portion in the hot water storage tank 501 through a line 601.

Further, heat exchange in the fuel cell 401 is performed by water flowing through a water flow line 602. Water flowing through the water flow line 602 is supplied from the portion of low temperature range of the hot water storage tank 501, then exchanges heat with the fuel cell 401 via the heat exchanger (second heat exchanger) 402, and thereafter is supplied to the portion of high water temperature in the hot water storage tank 501. Water is driven to flow through the water flow line 602 by the power of a pump 603 provided on the water flow line 602.

That is, the hydrogen generation system 6A has a configuration in which the recovery of heat generated in the hydrogen generation unit 201 and the recovery of heat generated in the fuel cell 401 are performed in parallel via the water flow line 206 and the water flow line 602.

Water of high temperature range accumulated in the hot water storage tank 501 is taken out through a water flow line 604. Hot water thus taken out is mixed with low temperature water supplied through a bypass line 605 so as to be adjusted to a suitable temperature for the intended use. At this time, low temperature water is not necessarily supplied by being branched from the water flow line 206 as shown in Fig. 6A, and may be supplied by being branched from the water flow line 601 or by providing another water flow line that allows low temperature water to flow therethrough.

The power of a pump 609 and the power of a pump 610 are respectively used for taking hot water of high temperature range out of the hot water storage tank 501, and for circulating water flowing through the bypass line 605.

It is preferable to employ a mechanism in which a valve 606, a valve 607, and a valve 608 are provided respectively on the water flow line 601, the water flow line 604, and the bypass line 605, so that water is circulated only when necessary by opening and closing those valves.

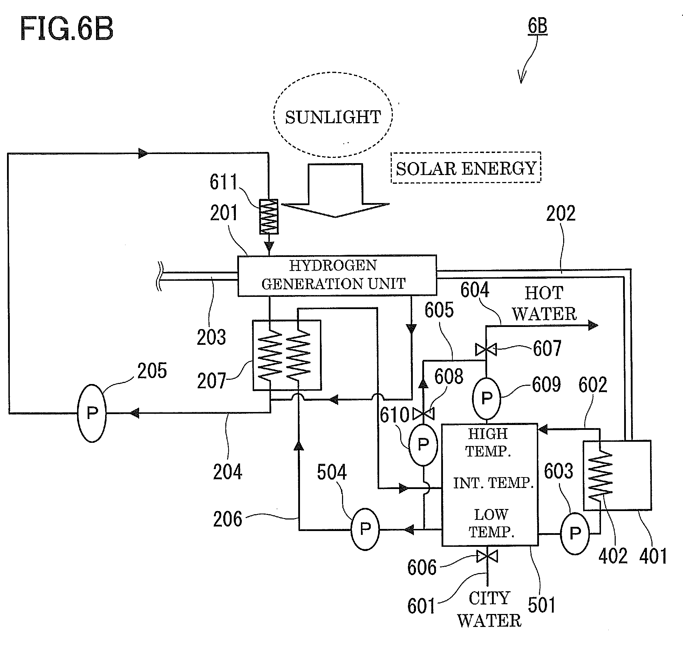

A hydrogen generation system 6B shown in Fig. 6B as another example of this embodiment has a configuration in which a heat radiator 611 is further provided on the circulation line 204, in the hydrogen generation system 6A.

For example, in summer when the demand for hot water decreases and a great deal of solar heat is obtained in the heat exchanger 207, the volume of water of intermediate temperature range becomes excessive in the hot water storage tank 501. At that time, there are cases where it is better to stop the operation of the pump 504 so as to stop producing water of intermediate temperature range, as a measure to prevent the water temperature distribution in the hot water storage tank 501 from deteriorating.

However, in such a case, heat exchange in the heat exchanger 207 between the circulation line 204 and the water flow line 206 also is stopped, thereby allowing the temperature of the hydrogen generation unit 201 to increase. The temperature increase of the hydrogen generation unit 201 changes the band structure of the semiconductor used for the semiconductor electrode. As a result, the semiconductor no longer exhibits properties as designed.

This problem can be solved by providing the heat radiator 611 on the circulation line 204 so as to suppress the temperature increase of the circulation line 204, as in the hydrogen generation system 6B.

The installation position of the heat radiator 611 is not specifically limited as long as it is on the circulation line 204. However, it is desirably provided at a position on the circulation line 204 immediately before circulation water is introduced into the hydrogen generation unit 201, in order to allow water having a temperature as low as possible to be introduced into the hydrogen generation unit 201.

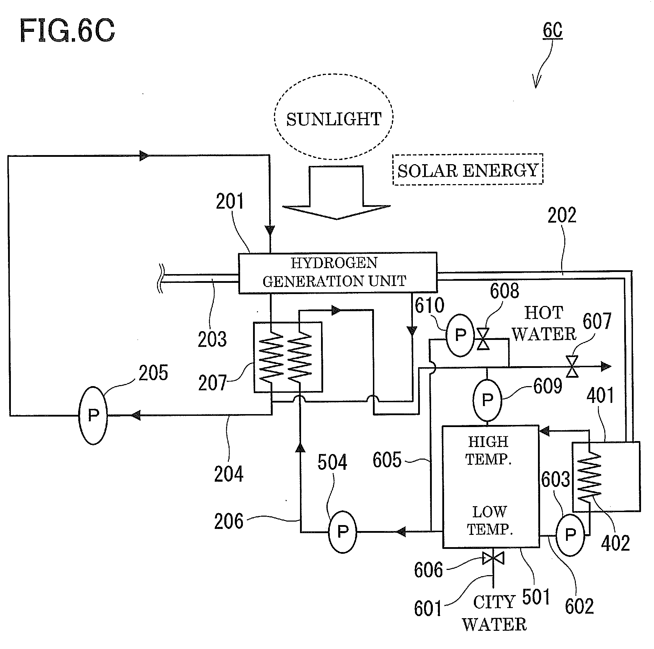

Further, a hydrogen generation system 6C shown in Fig. 6C as another example of this embodiment has a configuration in which water flowing through the water flow line 206, after being subjected to heat exchange in the heat exchanger 207, is mixed with hot water of high temperature range taken out from the hot water storage tank 501, without returning to the hot water storage tank 501, in the hydrogen generation system 6A. Also in this configuration, hot water thus taken out is mixed with low temperature water supplied through the bypass line 605 so as to be adjusted to a suitable temperature for the intended use, in the same manner as in the hydrogen generation system 6A. At this time, low temperature water is not necessarily supplied by being branched from the water flow line 206 as shown in Fig. 6C, and may be supplied by being branched from the water flow line 601 or by providing another water flow line that allows low temperature water to flow therethrough. Also in this configuration, the heat radiator 611 can be provided on the circulation line 204, in the same manner as in the hydrogen generation system 6B.

According to the configuration of the hydrogen generation system 6C, the temperature distribution in the hot water storage tank 501 consists only of a low temperature portion and a high temperature portion, which makes it easy to form and maintain a border layer of temperature.

Also to Embodiment 4, it is possible to apply the configuration in which the gas-liquid separation apparatuses 208a and 208b for separating hydrogen and oxygen from water are provided, and the configuration in which the storage unit 209 for storing hydrogen is provided on the hydrogen outlet line 202, as in Embodiments 1 to 3. These can be provided in the same manner as described above, and thus the descriptions thereof are omitted herein.

As described above, the hydrogen generation system of this embodiment is configured to include a hydrogen generation unit (which herein is the hydrogen generation unit 201), a first heat exchanger (which herein is the heat exchanger 207), and a mechanism (which herein is the circulation line 204 and the pump 205) that introduces a first liquid (which herein is circulation water in the circulation line 204) that has been cooled in the first heat exchanger into the hydrogen generation unit, as essential components of the hydrogen generation system of the present invention, and further include a fuel cell (which herein is the fuel cell 401), a hot water storage tank (which herein is the hot water storage tank 501), a mechanism (which herein is the water flow line 206 and the pump 504) that allows a second liquid (which herein is water in the water flow line 206) that has been heated in the first heat exchanger to merge with hot water in the hot water storage tank or that supplies the second water as hot water, a second heat exchanger (which herein is the heat exchanger 402) that allows water serving as a third liquid (which herein is water in the water flow line 602) to be heated by heat exchange with the fuel cell, and a mechanism (which herein is the water flow line 602 and the pump 603) that allows the third liquid that has been heated to merge with hot water in the hot water storage tank.

### Embodiment 5

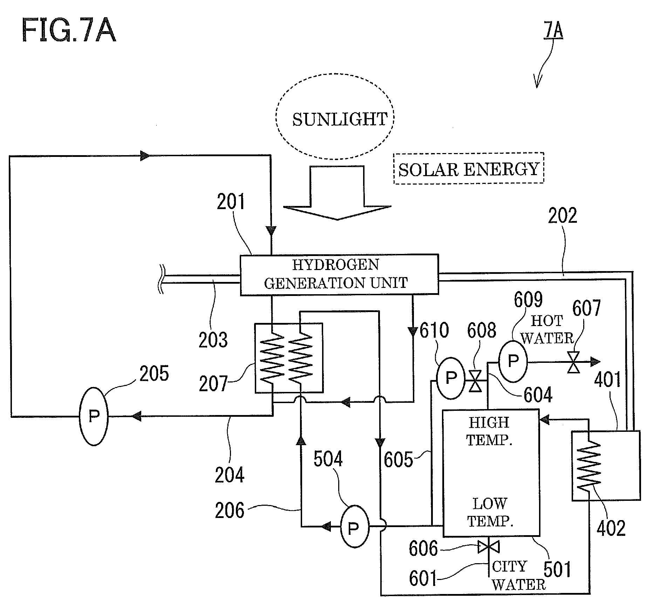

Fig. 7A to Fig. 7C show the respective configuration examples of the hydrogen generation system in Embodiment 5 of the present invention. In Fig. 7A to Fig. 7C, the same components as in Fig. 2A to Fig. 2E, Fig. 4A to Fig. 4D, Fig. 5A to Fig. 5D, and Fig. 6A to Fig. 6C are indicated with identical reference numerals, and the descriptions thereof are omitted.

A hydrogen generation system 7A shown in Fig. 7A has a configuration in which the fuel cell 401 and the hot water storage tank 501 are further provided in the hydrogen generation system of Embodiment 1, in the same manner as in the hydrogen generation system of Embodiment 4. However, the relationships of the water flow line 206, the fuel cell 401, and the hot water storage tank 501 in the hydrogen generation system 7A are different from those in the hydrogen generation system of Embodiment 4.

The hydrogen generation system 7A shown in Fig. 7A has a configuration in which water is supplied to the water flow line 206 from the low temperature portion in the hot water storage tank 501 while being driven by the power of the pump 504 provided on the water flow line 206, then is subjected to heat exchange with the circulation line 204 in the heat exchanger 207 and thereafter to heat exchange with the fuel cell 401 in the heat exchanger 402, and flows into the portion of high water temperature in the hot water storage tank 501.

That is, the hydrogen generation system 7A has a configuration in which the recovery of heat generated in the hydrogen generation unit 201 and the recovery of heat generated in the fuel cell 401 are performed in series via the water flow line 206.

Cold water (preferably city water) is introduced into the low temperature portion of the hot water storage tank through the water flow line 601.

The water of high temperature range accumulated in the hot water storage tank 501 is taken out through the water flow line 604 by the power of the pump 609. The hot water thus taken out is mixed with low temperature water supplied through the bypass line 605 so as to be adjusted to a suitable temperature for the intended use. At this time, low temperature water is not necessarily supplied by being branched from the water flow line 206 as shown in Fig. 6A, and may be supplied by being branched from the water flow line 601 or by providing another water flow line that allows low temperature water to flow therethrough.

It is desirable to employ a configuration in which the valve 606, the valve 607, and the valve 608 are provided respectively on the water flow line 601, the water flow line 604, and the bypass line 605, so that water is introduced therethrough by opening and closing each valve, as needed.

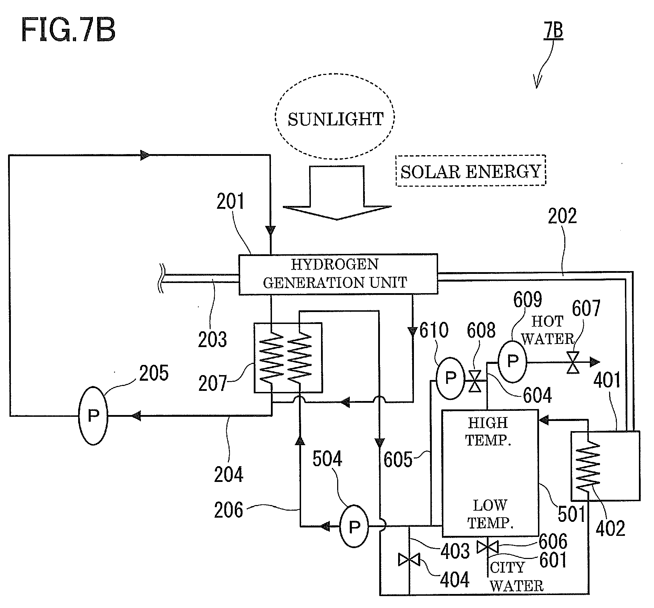

A hydrogen generation system 7B shown in Fig. 7B as another example of this embodiment has a configuration in which the bypass line 403 that allows water flowing through the water flow line 206 before being subjected to heat exchange in the heat exchanger 207 to merge with the water flow line 206 again without passing through the heat exchanger 207 at a point between the heat exchanger 207 and the fuel cell 401 is provided, in the hydrogen generation system 7A. Since the bypass line 403 is used on an as-needed basis, the valve 404 is provided thereon.

According to the configuration of the hydrogen generation system 7B, it is possible to adjust the temperature of water to be introduced into the fuel cell 401 using cold water by opening the valve 404 when the temperature of the water that has been subjected to heat exchange in the heat exchanger 207 is excessively high.

At this time, water to be used for adjusting the water temperature is not necessarily supplied through the bypass line 403, and may be supplied by being branched from the water flow line 601 or by providing another water flow line that allows low temperature water to flow therethrough.

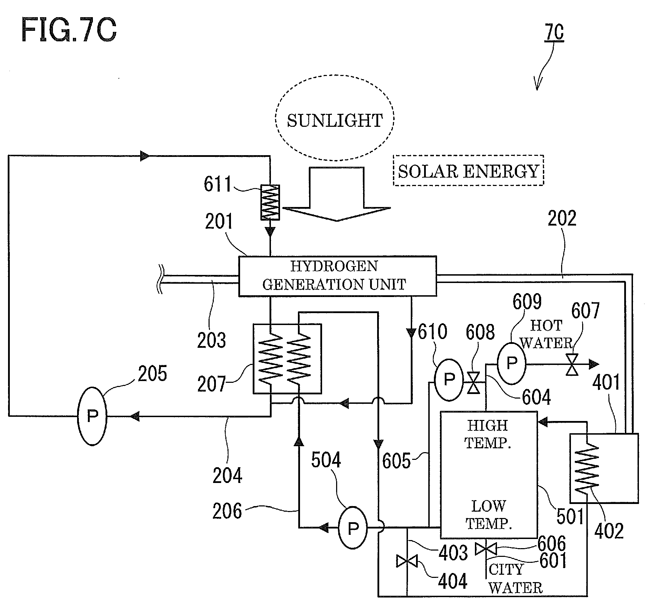

A hydrogen generation system 7C shown in Fig. 7C as another example of this embodiment has a configuration in which the heat radiator 611 is further provided on the circulation line 204, in the hydrogen generation system 7B. According to this configuration, for example, when it becomes necessary to stop the operation of the pump 504 such as when the demand for hot water decreases and hot water of high temperature in the hot water storage tank 501 increases excessively, it is possible to reduce the temperature of water flowing through the circulation line 204 by the heat radiator 611. The heat radiator 611 can be provided in the same manner as described in Embodiment 4.

Also to Embodiment 5, it is possible to apply the configuration in which the gas-liquid separation apparatuses 208a and 208b for separating hydrogen and oxygen from water are provided, and the configuration in which the storage unit 209 for storing hydrogen is provided on the hydrogen outlet line 202, as in Embodiments 1 to 4. These can be provided in the same manner as described above, and thus the descriptions thereof are omitted herein.

As described above, the hydrogen generation system of this embodiment is configured to include a hydrogen generation unit (which herein is the hydrogen generation unit 201), a first heat exchanger (which herein is the heat exchanger 207), and a mechanism (which herein is the circulation line 204 and the pump 205) that introduces a first liquid (which herein is circulation water in the circulation line 204) that has been cooled in the first heat exchanger into the hydrogen generation unit, as essential components of the hydrogen generation system of the present invention, and further include a fuel cell (which herein is the fuel cell 401), a hot water storage tank (which herein is the hot water storage tank 501), a second heat exchanger (which herein is the heat exchanger 402) that allows a second liquid (which herein is water in the water flow line 206) that has been heated in the first heat exchanger to be heated by heat exchange with the fuel cell, and a mechanism (which herein is the water flow line 206 and the pump 504) that allows the second liquid that has been heated in the second heat exchanger to merge with hot water in the hot water storage tank.

### Embodiment 6

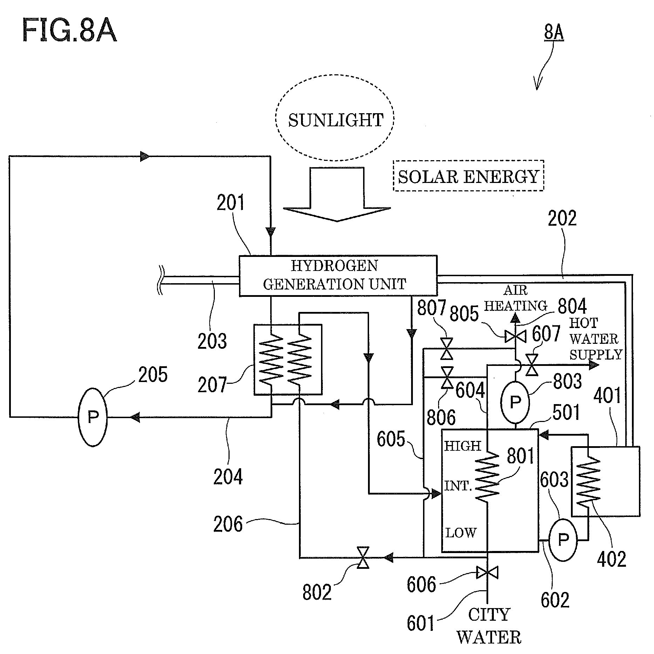

Fig. 8A to Fig. 8C show the respective configuration examples of the hydrogen generation system in Embodiment 6 of the present invention. In Fig. 8A to Fig. 8C, the same components as in Fig. 2A to Fig. 2E, Fig. 4A to Fig. 4D, Fig. 5A to Fig. 5D, Fig. 6A to Fig. 6C, and Fig. 7A to Fig. 7C are indicated with identical reference numerals, and the descriptions thereof are omitted.

A hydrogen generation system 8A shown in Fig. 8A has a configuration in which the fuel cell 401 and the hot water storage tank 501 are further provided in the hydrogen generation system of Embodiment 1, in the same manner as in the hydrogen generation system of Embodiment 4. However, the configuration of the hot water storage tank 501 and the usage of water stored in the water storage tank 501 in the hydrogen generation system 8A are different from those in the hydrogen generation system of Embodiment 4.

In the hydrogen generation system 8A, the water flow line 601 that preferably allows city water to flow therethrough is branched into water streams flowing through the water flow line 206 and the water flow line 604, before entering the hot water storage tank 501.

The water stream flowing through the water flow line 206 is supplied to the portion of intermediate water temperature range of the hot water storage tank 501, after being subjected to heat exchange with the circulation line 204 in the heat exchanger 207.

On the other hand, the water stream flowing through the water flow line 604 is heated in a heat exchanger (third heat exchanger) 801 provided inside the hot water storage tank 501. The heated water passes through the water flow line 604 and is led to the outside for daily use.

It is desirable that a valve 802 and the valve 607 are provided respectively on the water flow line 206 and the water flow line 604 so that circulation is allowed, as needed, by opening and closing each valve.

Further, heat exchange with the fuel cell 401 is performed by water flowing through the water flow line 602. Water flowing through the water flow line 602 is supplied from the portion of low temperature range of the hot water storage tank 501 or by being branched directly from the water flow line 601, then exchanges heat with the fuel cell 401 via the heat exchanger (second heat exchanger) 402, and thereafter is supplied to the portion of high water temperature in the hot water storage tank 501. The water flowing through the water flow line 602 is circulated by the power of the pump 603.

It also is possible to employ a configuration in which the water flow line 601 is branched to supply water to the inside of the hot water storage tank 501 thereby producing a layer of low temperature range inside the hot water storage tank 501, so that water is supplied from this low temperature portion to the water flow line 602.

Water in the high temperature portion inside the hot water storage tank 501 is discharged to the outside of the hot water storage tank 501 through a water flow line 804 by the power of a pump 803. The hot water thus discharged is desirably used mainly for air heating. It is desirable to employ a configuration in which a valve 805 is provided on the water flow line 804 so that hot water can be taken out as needed.

Such a configuration does not store water flowing through the water flow line 604 for daily use in the hot water storage tank over a long period of time. Thus, for example, the risk of incorporation of saprophytic bacteria, etc. is reduced.

Since the structure is such that the bypass line 605 extending from the water flow line 206 or the water flow line 601 is connected to each of the water flow line 604 and the water flow line 804, the configuration allows water to be adjusted to a suitable temperature for the intended use by mixing the above-obtained hot water with low temperature water.

It is desirable to employ a configuration in which a valve 806 and a valve 807 are provided on the bypass line 605, so that the volume of low temperature water to be mixed with the water flow line 604 and the water flow line 804 can be adjusted.

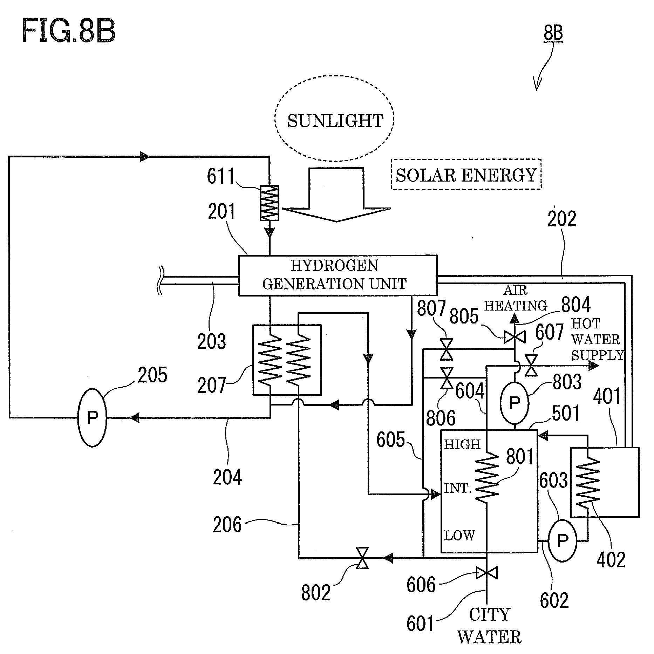

A hydrogen generation system 8B shown in Fig. 8B as another example of this embodiment has a configuration in which the heat radiator 611 is further provided on the circulation line 204, in the hydrogen generation system 8A. According to this configuration, for example, when it becomes necessary to stop the heat exchange in the heat exchanger 207 by closing the valve 802 such as when the demand for hot water decreases and hot water of intermediate temperature in the hot water storage tank 501 increases excessively, it is possible to reduce the temperature of water flowing through the circulation line 204 by the heat radiator 611. The heat radiator 611 can be provided in the same manner as described above, and thus the description thereof is omitted herein.

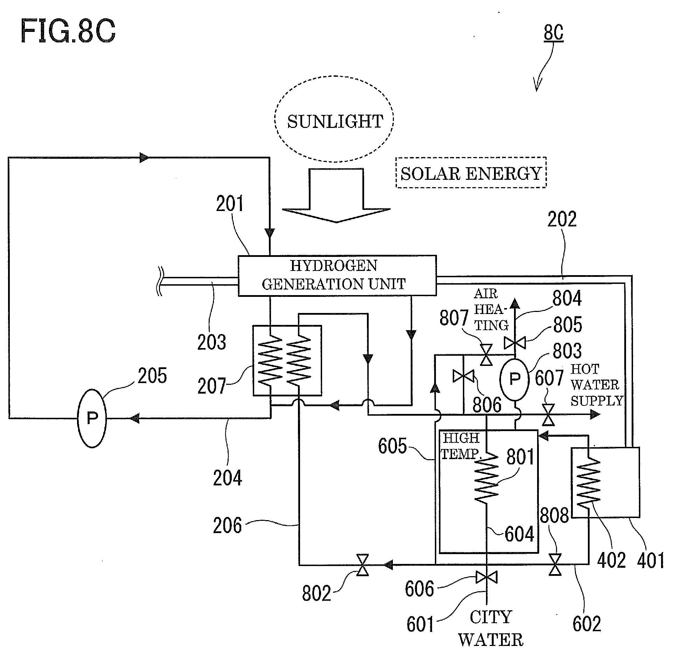

Further, a hydrogen generation system 8C shown in Fig. 8C as another example of this embodiment has a configuration in which water flowing through the water flow line 206, after having been subjected to heat exchange in the heat exchanger 207, is mixed with hot water of high temperature range taken out from the hot water storage tank 501, without returning to the hot water storage tank 501, in the hydrogen generation system 8A. Also in this configuration, hot water thus taken out is mixed with low temperature water supplied through the bypass line 605 so as to be adjusted to a suitable temperature for the intended use, in the same manner as in the hydrogen generation system 8A. At this time, low temperature water is not necessarily supplied by being branched from the water flow line 206 as shown in Fig. 8A, and may be supplied by being branched from the water flow line 601 or by providing another water flow line that allows low temperature water to flow therethrough.

Also in the hydrogen generation system 8C, it is desirable to employ a configuration in which the valve 806 and the valve 807 are provided on the bypass line 605, so that the volume of low temperature water to be mixed with each of the water flow line 601 and the water flow line 804 can be adjusted.

Water flowing through the water flow line 602 to be subjected to heat exchange with the fuel cell 401 may be supplied by being branched from the water flow line 601, as shown in Fig. 8C, or may be supplied by providing a water flow line branched from the water flow line 601, thereby allowing a layer of low temperature range to be formed inside the hot water storage tank 501, so that water is supplied therefrom. A valve 808 is desirably provided on the water flow line 602.

According to the configuration of the hydrogen generation system 8C, the temperature distribution in the hot water storage tank 501 consists only of a high temperature portion, or a low temperature portion and a high temperature portion, which makes it easy to form and maintain a border layer of temperature.

Also to Embodiment 6, it is possible to apply the configuration in which the gas-liquid separation apparatuses 208a and 208b for separating hydrogen and oxygen from water are provided, and the configuration in which the storage unit 209 for storing hydrogen is provided on the hydrogen outlet line 202, as in Embodiments 1 to 5. These can be provided in the same manner as described above, and thus the descriptions thereof are omitted herein.

As described above, the hydrogen generation system of this embodiment is configured to include a hydrogen generation unit (which herein is the hydrogen generation unit 201), a first heat exchanger (which herein is the heat exchanger 207), and a mechanism (which herein is the circulation line 204 and the pump 205) that introduces a first liquid (which herein is circulation water in the circulation line 204) that has been cooled in the first heat exchanger into the hydrogen generation unit, as essential components of the hydrogen generation system of the present invention, and further include a fuel cell (which herein is the fuel cell 401), a hot water storage tank (which herein is the hot water storage tank 501), a mechanism (which herein is the water flow line 206 and the pump 802) that allows a second liquid (which herein is water in the water flow line 206) that has been heated in the first heat exchanger to merge with hot water in the hot water storage tank or that supplies the second liquid as hot water, a second heat exchanger (which herein is the heat exchanger 402) that allows water serving as a third liquid (which herein is water in the water flow line 602) to be heated by heat exchange with the fuel cell, a mechanism (which herein is the water flow line 602 and the pump 603) that allows the third liquid that has been heated to merge with hot water in the hot water storage tank, and a third heat exchanger (which herein is a heat exchanger 801) that is provided inside the hot water storage tank and that allows water serving as a fourth liquid (which herein is water in the water flow line 601) to be heated by heat exchange between hot water in the hot water storage tank and the fourth liquid.

### Embodiment 7

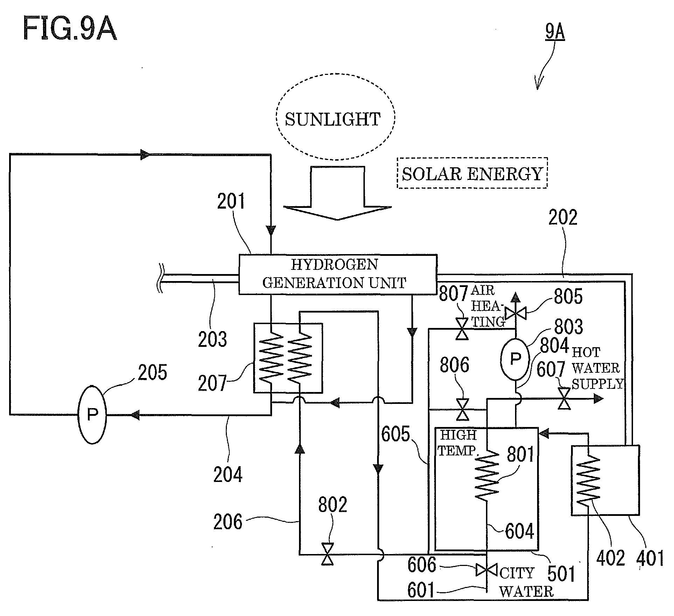

Fig. 9A to Fig. 9C show the respective configuration examples of the hydrogen generation system in Embodiment 7 of the present invention. In Fig. 9A to Fig. 9C, the same components as in Fig. 2A to Fig. 2E, Fig. 4A to Fig. 4D, Fig. 5A to Fig. 5D, Fig. 6A to Fig. 6C, Fig. 7A to Fig. 7C, and Fig. 8A to Fig. 8C are indicated with identical reference numerals, and the descriptions thereof are omitted.

A hydrogen generation system 9A shown in Fig. 9A has a configuration in which the fuel cell 401 and the hot water storage tank 501 are further provided in the hydrogen generation system of Embodiment 1, in the same manner as in the hydrogen generation system of Embodiment 5. However, the configuration of the hot water storage tank 501 and the usage of water stored in the water storage tank 501 in the hydrogen generation system 9A are different from those in the hydrogen generation system of Embodiment 5.

In the hydrogen generation system 9A, the water flow line 601 that preferably allows city water to flow therethrough is branched into water streams flowing through the water flow line 206 and the water flow line 604, before entering the hot water storage tank 501.

The water flowing through the water flow line 206, after being branched from the water flow line 601, is subjected to heat exchange with water flowing through the circulation line 204 in the heat exchanger 207. After the heating in the heat exchanger 207, it exchanges heat with the fuel cell 401 via the heat exchanger 402 to be further heated, and thereafter flows into the high temperature region in the hot water storage tank 501.

On the other hand, the water flowing through the water flow line 604 is heated via the heat exchanger 801 inside the hot water storage tank 501.

It is desirable that hot water accumulated in the hot water storage tank 501 is driven to flow through the water flow line 804 by the power of the pump 803 to be used for air heating, and the hot water that has flowed through the water flow line 604 and has been heated within the hot water storage tank 501 is used for hot water supply, respectively.

It is desirable to employ a configuration in which the valve 607 and the valve 805 are provided respectively on the water flow line 604 and the water flow line 804 so that hot water can be taken out as needed.

Since the structure is such that the bypass line 605 branched at a portion on the water flow line 206 before being heated in the heat exchanger 207 (portion upstream of the heat exchanger 207) is connected to each of the water flow line 604 and the water flow line 804, the configuration allows water to be adjusted to a suitable temperature for the intended use by mixing the above-obtained hot water with low temperature water.

It is desirable to employ a configuration in which the valve 806 and the valve 807 are provided on the bypass line 605, so that the volume of low temperature water to be mixed with the water flow line 604 and the water flow line 804 can be adjusted.

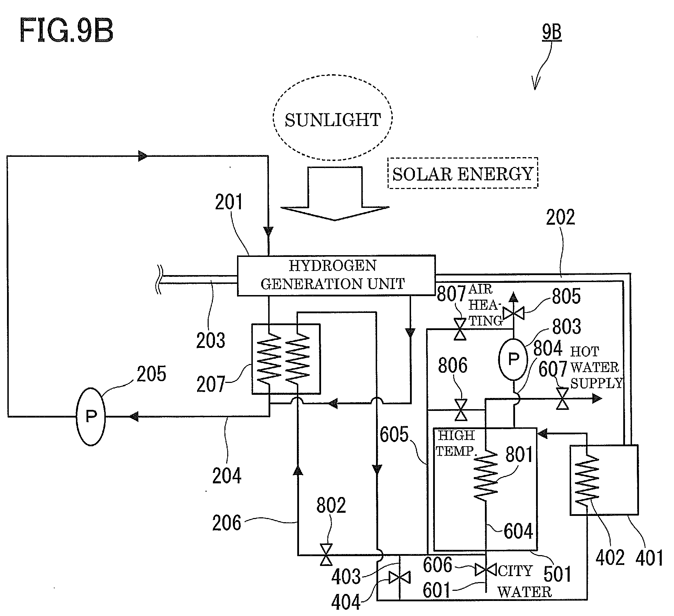

A hydrogen generation system 9B shown in Fig. 9B as another example of this embodiment has a structure in which the bypass line 403 that allows water flowing through the water flow line 206 before being subjected to heat exchange in the heat exchanger 207 (water upstream of the heat exchanger 207) to merge with the water flow line 206 again without passing through the heat exchanger 207 at a point between the heat exchanger 207 and the fuel cell 401 is provided, in the hydrogen generation system 9A. Since the bypass line 403 is used on an as-needed basis, a valve 404 is provided thereon.

According to the structure of the hydrogen generation system 9B, it is possible to adjust the temperature of water to be introduced into the fuel cell 401 using cold water by opening the valve 404 when the temperature of the water that has been subjected to heat exchange in the heat exchanger 207 is excessively high.

At this time, water to be used for adjusting the water temperature is not necessarily supplied through the bypass line 403, and may be supplied by being branched from the water flow line 601 or by providing another water flow line that allows low temperature water to flow therethrough.

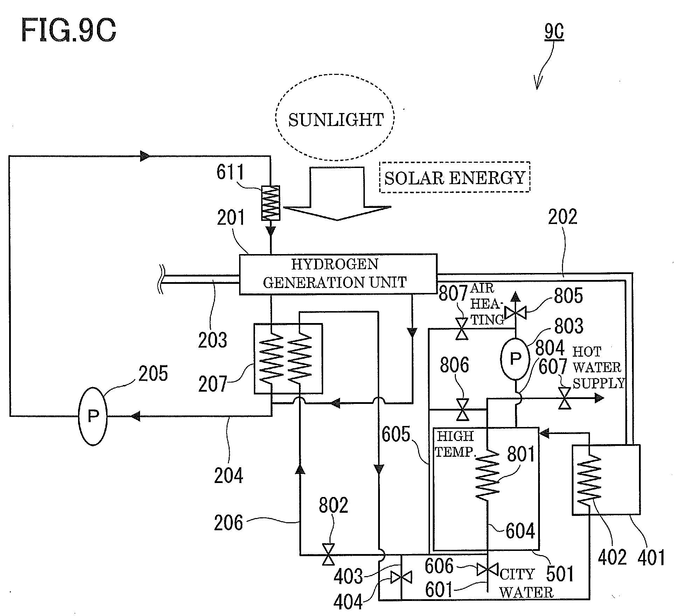

A hydrogen generation system 9C shown in Fig. 9C as another example of this embodiment has a configuration in which the heat radiator 611 is further provided on the circulation line 204, in the hydrogen generation system 9B. According to this configuration, for example, when it becomes necessary to stop the operation of the pump 504 such as when the demand for hot water decreases and hot water of high temperature in the hot water storage tank 501 increases excessively, it is possible to reduce the temperature of water flowing through the circulation line 204 by the heat radiator 611. The heat radiator 611 can be provided in the same manner as described in Embodiment 4.

Also to Embodiment 7, it is possible to apply the configuration in which the gas-liquid separation apparatuses 208a and 208b for separating hydrogen and oxygen from water are provided, and the configuration in which the storage unit 209 for storing hydrogen is provided on the hydrogen outlet line 202, as in Embodiments 1 to 6. These can be provided in the same manner as described above, and thus the descriptions thereof are omitted herein.

As described above, the hydrogen generation system of this embodiment is configured to include a hydrogen generation unit (which herein is the hydrogen generation unit 201), a first heat exchanger (which herein is the heat exchanger 207), and a mechanism (which herein is the circulation line 204 and the pump 205) that introduces a first liquid (which herein is circulation water in the circulation line 204) that has been cooled in the first heat exchanger into the hydrogen generation unit, as essential components of the hydrogen generation system of the present invention, and further include a fuel cell (which herein is the fuel cell 401), a hot water storage tank (which herein is the hot water storage tank 501), a second heat exchanger (which herein is the heat exchanger 402) that allows a second liquid (which herein is water in the water flow line 206) that has been heated in the first heat exchanger to be heated by heat exchange with the fuel cell, a mechanism (which herein is the water flow line 206 and the pump 802) that allows the second liquid that has been heated in the second heat exchanger to merge with hot water in the hot water storage tank, and a third heat exchanger (which herein is a heat exchanger 801) that is provided inside the hot water storage tank and that allows water serving as a third liquid (which herein is water in the water flow line 601) to be heated by heat exchange between hot water in the hot water storage tank and the third liquid.

### Embodiment 8

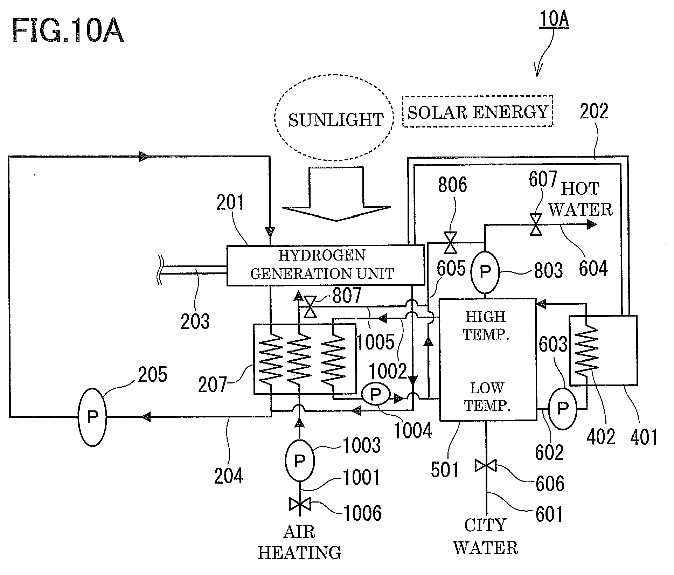

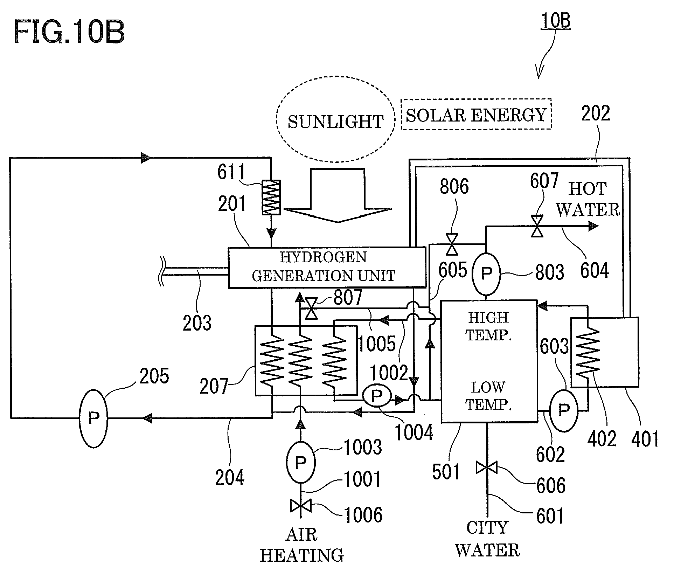

Fig. 10A and Fig. 10B show the respective configuration examples of the hydrogen generation system in Embodiment 8 of the present invention. In Fig. 10A and Fig. 10B, the same components as in Fig. 2A to Fig. 2E, Fig. 4A to Fig. 4D, Fig. 5A to Fig. 5D, Fig. 6A to Fig. 6C, Fig. 7A to Fig. 7C, Fig. 8A to Fig. 8C, and Fig. 9A to Fig. 9C are indicated with identical reference numerals, and the descriptions thereof are omitted.

In a hydrogen generation system 10A shown in Fig. 10A, heat is exchanged among the circulation line 204, a water flow line 1001, and a water flow line 1002 in the heat exchanger (first heat exchanger) 207.

It should be noted herein that the water flow line 1001 is a water flow line mainly used for air heating, and the water flow line 1002 is a water flow line flowing from the portion of high temperature range of the hot water storage tank 501 to the portion of low temperature range or the portion of intermediate temperature range thereof.

The water flow line 1001 and the water flow line 1002 are respectively provided with a pump 1003 and a pump 1004 as a power source.

The water flow line 601 is connected to the portion of low temperature range of the hot water storage tank 501. The valve 606 is desirably provided on the water flow line 601 so as to allow the flow therethrough, as needed.

Heat exchange between the fuel cell 401 and water flowing through the water flow line 602 is performed in the heat exchanger (second heat exchanger) 402. The pump 603 is provided on the water flow line 602 as a power source.

The water flow line 602 is configured to allow low temperature water to flow therethrough by being branched from the portion of low temperature range of the hot water storage tank 501 or the water flow line 601. The water flow line 602 is configured to flow into the portion of high temperature range of the hot water storage tank 501 after having been subjected to heat exchange with the fuel cell 401.

Hot water of high temperature range in the hot water storage tank 501 is driven to flow through the water flow line 604 by the power of the pump 803 to be used for hot water supply. It is desirable to employ a configuration in which the valve 607 is provided on the water flow line 604 so that hot water can be taken out as needed.

The bypass line 605 and a bypass line 1005 are respectively provided on the water flow line 604 and the water flow line 1001, thereby providing a configuration that allows water to be adjusted to a suitable temperature for the intended use by mixing the above-obtained hot water with low temperature water.

The bypass line 605 is a line branched from the low temperature portion of the water flow line 1002 after releasing heat in the heat exchanger 207, a line branched from the portion of low temperature range of the hot water storage tank, or a line branched from the water flow line 601. The bypass line 1005 also is such a line as described above, or a line branched from the bypass line 605.

It is desirable that the valve 806 and the valve 807 are provided respectively on the bypass line 605 and the bypass line 1005 so as to allow the flow therethrough, as needed.

Also on the water flow line 1001, a valve 1006 is provided so as to allow the flow therethrough, as needed.

A hydrogen generation system 10B shown in Fig. 10B as another example of this embodiment has a configuration in which the heat radiator 611 is further provided on the circulation line 204, in the hydrogen generation system 10A. According to this configuration, for example, when the heat exchange in the heat exchanger 207 is rendered impossible for some reasons, it is possible to reduce the temperature of water flowing through the circulation line 204 by the heat radiator 611. The heat radiator 611 can be provided in the same manner as described above, and thus the description thereof is omitted herein.

Also to Embodiment 8, it is possible to apply the configuration in which the gas-liquid separation apparatuses 208a and 208b for separating hydrogen and oxygen from water are provided, and the configuration in which the storage unit 209 for storing hydrogen is provided on the hydrogen outlet line 202, as in Embodiments 1 to 7. These can be provided in the same manner as described above, and thus the descriptions thereof are omitted herein.

### Embodiment 9

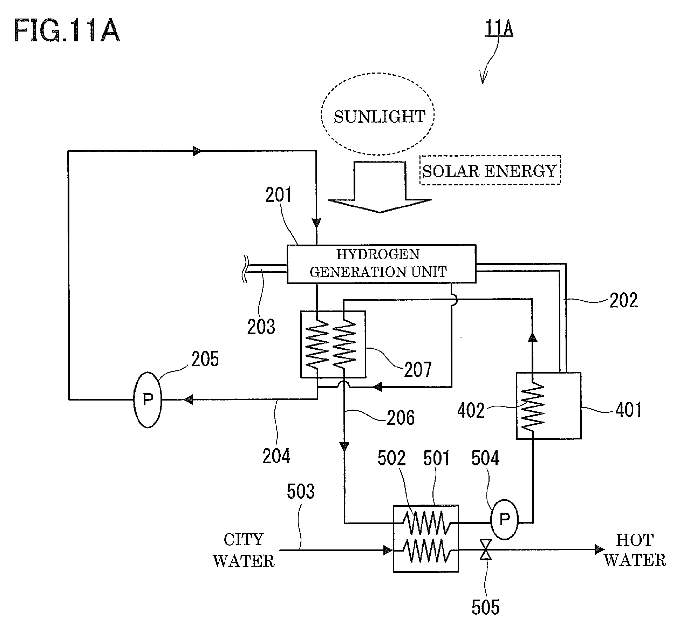

Fig. 11A to Fig. 11E show the respective configuration examples of the hydrogen generation system in Embodiment 9 of the present invention, and the operation methods thereof. In Fig. 11A to Fig. 11E, the same components as in Fig. 2A to Fig. 2E, Fig. 4A to Fig. 4D, Fig. 5A to Fig. 5D, Fig. 6A to Fig. 6C, Fig. 7A to Fig. 7C, Fig. 8A to Fig. 8C, Fig. 9A to Fig. 9C, Fig. 10A, and Fig. 10B are indicated with identical reference numerals, and the descriptions thereof are omitted.

Although a hydrogen generation system 11A shown in Fig. 11A has the same configuration as the hydrogen generation system 5A of Embodiment 3, the operation method thereof is different. It should be noted that the configuration of the hydrogen generation unit 201 is not limited to the configuration shown in Embodiment 1.

Hydrogen generation systems contain a liquid thereinside. Therefore, if the liquid has a reduced temperature and freezes, the hydrogen generation systems may be damaged. Further, if a hydrogen generation unit is covered with snow due to snowfall, the hydrogen generation unit is not irradiated with sunlight and thus is rendered unable to cause water splitting reactions.

To deal with such problems, the hydrogen generation system of this embodiment 11A is equipped with a mechanism that enables, when the temperature of circulation water (first liquid) in the circulation line 204 is lower than the temperature of a liquid (second liquid) in the water flow line 206 and water (third liquid; hot water in the hot water storage tank 501) in the water flow line 503, the circulation water in the circulation line 204 to be heated by heat exchange between the circulation water in the circulation line 204 and the liquid in the water flow line 206 or the water in the water flow line 503. Specifically, freezing prevention or snowmelt is enabled by returning the heat, which is flowing in the direction from the circulation line 204 to the hot water storage tank 501 in normal operation, reversely to the circulation line 204.

As one method to achieve such an operation, the flow of water flowing through the water flow line 206 may be reversed so that the liquid flowing through the circulation line 206 passes sequentially through the heat exchanger 502, the heat exchanger 402, and the heat exchanger 207.

According to this operation method, the heat accumulated in the hot water storage tank 501 is given to the liquid flowing through the water flow line 206 in the heat exchanger 502, and further the heat is passed from the liquid flowing through the circulation line 206 to the liquid flowing through the circulation line 204 in the heat exchanger 207.

Thus, it is possible to solve the problems such as that snow coverage of the hydrogen generation unit 201 prevents sunlight irradiation during winter season in heavy snowfall regions, and that water inside the hydrogen generation system 11A freezes in severe cold regions.

The configuration of the hydrogen generation system 11A can be used in combination with the hydrogen generation systems of Embodiments 1 to 8.

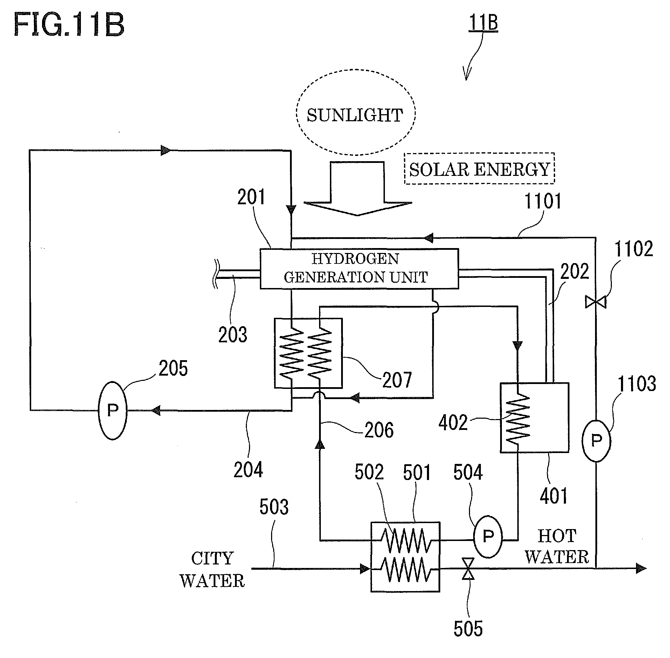

A hydrogen generation system 11B shown in Fig. 11B as another example of this embodiment has a configuration in which a bypass line 1101 that enables hot water to be supplied from the hot water storage tank 501 to the circulation line 204 is provided.

According to this configuration, when there occurs a possibility that snow coverage of the hydrogen generation unit 201 prevents sunlight irradiation, or water inside the hydrogen generation system 11B freezes, it is possible to prevent the freezing or to melt the snow by operating a valve 1102 provided on the bypass line 1101 so as to introduce hot water into the circulation line 204.

A pump 1103 is provided on the bypass line 1101 as a power source.

The configuration of the hydrogen generation system 11B can be used in combination with the systems of Embodiments 1 to 8.

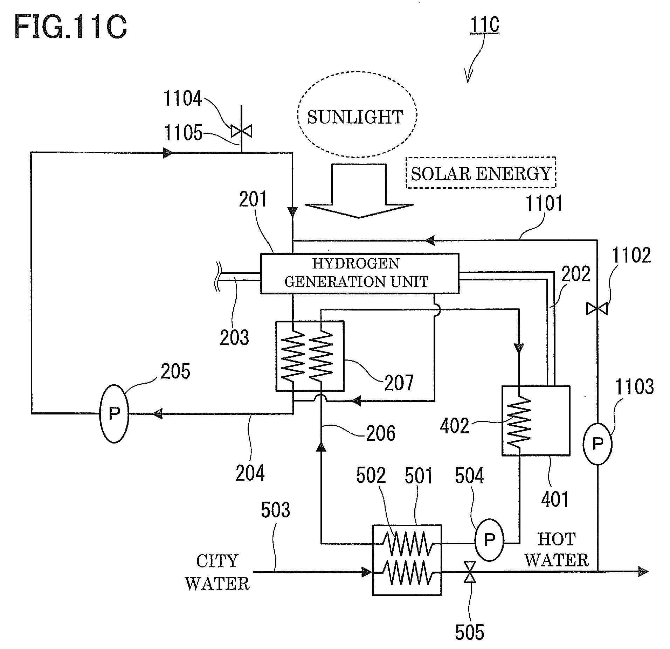

A hydrogen generation system 11C shown in Fig. 11C as another example of this embodiment has a configuration in which a valve 1104 and an outlet line 1105 are further provided on the circulation line 204, so that the liquid in the circulation line 204 can be discharged to the outside, in the hydrogen generation system 11B.

According to this configuration, when there occurs a possibility that the liquid in the circulation line 204 freezes during winter season and the hydrogen generation system 11C is damaged, the hydrogen generation system 11C can be prevented from being damaged by operating the valve 1104 so as to discharge the liquid in the circulation line 204 to the outside through the outlet line 1105.

In the case where the liquid in the circulation line 204 has been discharged to the outside, the hydrogen generation system 11C can easily be reverted by preparing a refilling liquid and refilling the circulation line 204 with the liquid.

The configuration of the hydrogen generation system 11C can be used in combination with the hydrogen generation systems of Embodiments 1 to 8 and the hydrogen generation systems 11A and 11B of this embodiment.

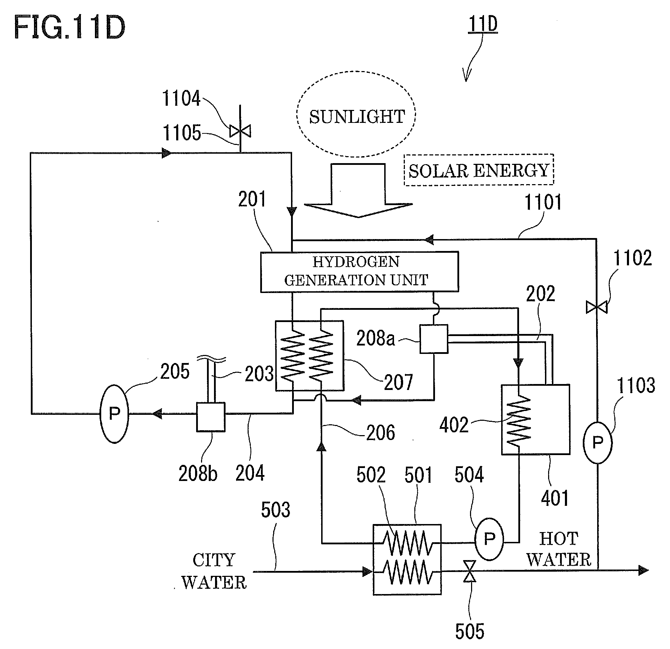

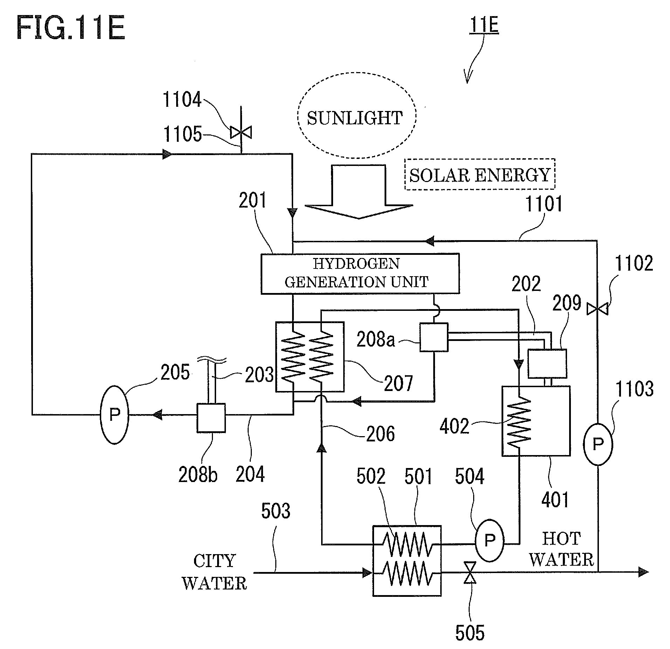

Also to Embodiment 9, it is possible to apply the configuration in which the gas-liquid separation apparatuses 208a and 208b for separating hydrogen and oxygen from water are provided (see Fig. 11D), and the configuration in which the storage unit 209 for storing hydrogen is provided on the hydrogen outlet line 202 (see Fig. 11E), as in Embodiments 1 to 8. These can be provided in the same manner as described above, and thus the descriptions thereof are omitted herein.

The hydrogen generation systems of Embodiments 1 to 9 described above are not only a system for generating hydrogen but also a system for producing hot water. Accordingly, the configurations of the hydrogen generation systems of Embodiments 1 to 9 and the descriptions thereof can be applied to the configuration of the hot water production systems of the embodiments of the present invention and the descriptions thereof, as well. The hot water production system of the present invention is a system including a solar water heater that holds a first liquid and heats at least a part of the first liquid by being irradiated with sunlight, a fuel cell, and a mechanism that supplies hot water using heat recovered from the first liquid that has been heated in the solar water heater and heat generated in the fuel cell. The hot water system of the present invention also may be configured as a system including the solar water heater, the fuel cell, a first heat exchanger that cools the first liquid that has been heated in the solar water heater by heat exchange with a second liquid as well as heating the second liquid, and the second heat exchanger that further heats the second liquid that has been heated in the first heat exchanger by heat exchange between the second liquid and the fuel cell. In this configuration, hot water is supplied using the second liquid heated in the second heat exchanger. In the case of applying the configurations of the hydrogen generation systems of Embodiments 1 to 9 and the descriptions thereof to the configurations of the hot water production systems of the embodiments of the present invention and the descriptions thereof, the hydrogen generation unit corresponds to the solar water heater in the hot water production system of the present invention.

### INDUSTRIAL APPLICABILITY

The hydrogen generation system according to the present invention enables hot water to be obtained by recovering not only hydrogen energy derived from water decomposition through sunlight irradiation, but also heat energy derived from circulation water heated by sunlight, thus achieving high use efficiency of solar energy. Accordingly, the hydrogen generation system of the present invention is useful, for example, as a domestic power generation system.

## Claims

1. A hydrogen generation system (2A) comprising:
a hydrogen generation unit (201) holding a first liquid containing water, the hydrogen generation unit (201) allowing a part of the water contained in the first liquid to be decomposed into hydrogen and oxygen as well as at least a part of the first liquid to be heated, by being irradiated with sunlight;
a first heat exchanger (207) for cooling the first liquid that has been heated in the hydrogen generation unit (201) and heating a second liquid that is water, by heat exchange between the first liquid and the second liquid;
a mechanism for introducing the first liquid that has been cooled in the first heat exchanger (207) into the hydrogen generation unit (201);
a fuel cell (401);
a hot water storage tank (501);
a second heat exchanger (402) for heating the second liquid that has been heated in the first heat exchanger (207), by heat exchange with the fuel cell (401); and
a mechanism for merging the second liquid that has been heated in the second heat exchanger (402) with hot water in the hot water storage tank (501);
**characterized in that** a mechanism for adjusting a temperature of the second liquid by supplying cold water to the second liquid after having been heated in the first heat exchanger (207) but before being subjected to heat exchange with the fuel cell (401) in the second heat exchanger (402).

2. The hydrogen generation system (2A) according to claim 1, further comprising:
a third heat exchanger (502) for heating water that serves as a third liquid by heat exchange between the hot water in the hot water storage tank (501) and the third liquid, the third heat exchanger (502) being provided inside the hot water storage tank (501).

3. The hydrogen generation system (2A) according to claim 1 or 2, wherein
the first heat exchanger (207) is provided adjacent to the hydrogen generation unit (201).

4. The hydrogen generation system (2A) according to claim 1 or 2, further comprising:
a mechanism for supplying hydrogen generated in the hydrogen generation unit (201) to the fuel cell (401).

5. The hydrogen generation system (2A) according to claim 1 or 2, wherein
hot water in the hot water storage tank (501) is obtained by further recovering heat generated in the hydrogen generation unit (201).

6. The hydrogen generation system (2A) according to claim 1 or 2, wherein
the hydrogen generation unit (201) comprises a semiconductor electrode (301) including a semiconductor material capable of decomposing water into hydrogen and oxygen, a counter electrode (302) that is made of an electrically conductive material and that is connected electrically to the semiconductor electrode (301), the first liquid in contact with the semiconductor electrode (301) and the counter electrode (302), and a housing (304) accommodating the semiconductor electrode (301), the counter electrode (302), and the first liquid thereinside, and
when the semiconductor electrode (301) is irradiated with sunlight, a part of the water contained in the first liquid is decomposed into hydrogen and oxygen, so that hydrogen is generated.

7. The hydrogen generation system (2A) according to claim 6, wherein
the first liquid is branched into a flow path on the semiconductor electrode (301) side and a flow path on the counter electrode (302) side before being introduced into the hydrogen generation unit (201).

8. The hydrogen generation system (2A) according to claim 1 or 2, further comprising
a gas-liquid separation apparatus (208b) for separating a mixture of hydrogen generated in the hydrogen generation unit and the first liquid into hydrogen and the first liquid, the gas-liquid separation apparatus (208b) being provided outside the hydrogen generation unit (201).

9. The hydrogen generation system (2A) according to claim 1, further comprising:
a mechanism for leading the first liquid to the outside through a flow path.

10. The hydrogen generation system (2A) according to claim 1, further comprising:
a storage unit (209) for storing hydrogen generated in the hydrogen generation unit (201).

## Patentansprüche

1. Wasserstofferzeugungssystem (2A), umfassend:
eine Wasserstofferzeugungseinheit (201), welche eine erste Flüssigkeit umfasst, die Wasser beinhaltet,
wobei die Wasserstofferzeugungseinheit (201) es erlaubt, dass ein Teil des Wassers enthalten in der ersten Flüssigkeit in Wasserstoff und Sauerstoff zerlegt wird und dass zumindest ein Teil der ersten Flüssigkeit erhitzt wird, durch Bestrahlung mit Sonnenlicht;
einen ersten Wärmetauscher (207) zum Abkühlen der ersten Flüssigkeit, die in der Wasserstofferzeugungseinheit (201) erhitzt worden ist, und zum Erwärmen einer zweiten Flüssigkeit, die Wasser ist, durch Wärmeaustausch zwischen der ersten Flüssigkeit und der zweiten Flüssigkeit;
einen Mechanismus zum Einführen der ersten Flüssigkeit, die in dem ersten Wärmetauscher (207) abgekühlt wurde, in die Wasserstofferzeugungseinheit (201);
eine Brennstoffzelle (401);
einen Heißwasserspeichertank (501);
einen zweiten Wärmetauscher (402) zum Erwärmen der zweiten Flüssigkeit, die in dem ersten Wärmetauscher (207) erwärmt wurde, durch Wärmeaustausch mit der Brennstoffzelle (401); und
einen Mechanismus für das Zusammenführen der zweiten Flüssigkeit, die in dem zweiten Wärmetauscher (402) erwärmt wurde, mit heißem Wasser in dem Heißwasserspeichertank (501);
**gekennzeichnet durch** einen Mechanismus zum Anpassen einer Temperatur der zweiten Flüssigkeit **durch** Zufuhr von kaltem Wasser zu der zweiten Flüssigkeit, nachdem diese in dem ersten Wärmetauscher (207) erhitzt wurde, aber bevor diese Wärme mit der Brennstoffzelle (401) in dem zweiten Wärmetauscher (402) austauscht.

2. Wasserstofferzeugungssystem (2A) nach Anspruch 1, ferner umfassend:
einen dritten Wärmetauscher (502) zum Erwärmen von Wasser, das als eine dritte Flüssigkeit dient durch Wärmeaustausch zwischen dem heißen Wasser im Heißwasserspeichertank (501) und der dritten Flüssigkeit, wobei der dritte Wärmetauscher (502) im Inneren des Heißwasserspeichertanks (501) bereitgestellt wird.

3. Wasserstofferzeugungssystem (2A) nach Anspruch 1 oder 2, wobei der erste Wärmetauscher (207) angrenzend an die Wasserstofferzeugungseinheit (201) bereitgestellt wird.

4. Wasserstofferzeugungssystem (2A) nach Anspruch 1 oder 2, ferner umfassend:
einen Mechanismus zum Zuführen von Wasserstoff hergestellt in der Wasserstofferzeugungseinheit (201) an die Brennstoffzelle (401).

5. Wasserstofferzeugungssystem (2A) nach Anspruch 1 oder 2, wobei heißes Wasser in dem Heißwasserspeichertank (501) bezogen wird durch Rückgewinnung von Wärme erzeugt in der Wasserstofferzeugungseinheit (201).

6. Wasserstofferzeugungssystem (2A) nach Anspruch 1 oder 2, wobei die Wasserstofferzeugungseinheit (201) eine Halbleiterelektrode (301) mit einem Halbleitermaterial, geeignet zur Zersetzung von Wasser in Wasserstoff und Sauerstoff, umfasst;
eine Gegenelektrode (302), die aus einem elektrisch leitenden Material ist, und die elektrisch mit der Halbleiterelektrode (301) verbunden ist,
wobei die erste Flüssigkeit in Kontakt mit der Halbleiterelektrode (301) und der Gegenelektrode (302) ist, und
ein Gehäuse (304), welches die Halbleiterelektrode (301), die Gegenelektrode (302) und die erste Flüssigkeit im Inneren umfasst, und wobei
wenn die Halbleiterelektrode (301) mit Sonnenlicht bestrahlt wird, ein Teil des Wassers enthalten in der ersten Flüssigkeit in Wasserstoff und Sauerstoff zerlegt wird, so dass Wasserstoff erzeugt wird.

7. Wasserstofferzeugungssystem (2A) nach Anspruch 6, wobei die erste Flüssigkeit in einen Strömungspfad auf der Halbleiterelektrodenseite (301) und einen Strömungspfad auf der Gegenelektrodenseite (302) verzweigt wird, bevor diese in die Wasserstofferzeugungseinheit (201) eingeführt wird.

8. Wasserstofferzeugungssystem (2A) nach Anspruch 1 oder 2, ferner umfassend:
eine Gas-Flüssigkeits-Trennvorrichtung (208b) zum Trennen einer Mischung von Wasserstoff erzeugt in der Wasserstofferzeugungseinheit und der ersten Flüssigkeit in Wasserstoff und die erste Flüssigkeit, wobei die Gas-Flüssigkeits-Trennvorrichtung (208b) außerhalb der Wasserstofferzeugungseinheit (201) bereitgestellt.

9. Wasserstofferzeugungssystem (2A) nach Anspruch 1, ferner umfassend:
einen Mechanismus zum Leiten der ersten Flüssigkeit nach außen durch einen Strömungspfad.

10. Wasserstofferzeugungssystem (2A) nach Anspruch 1, ferner umfassend:
eine Speichereinheit (209) zum Speichern von Wasserstoff, der in der Wasserstofferzeugungseinheit (201) erzeugt wurde.

## Revendications

1. Système de génération d'hydrogène (2A) comprenant:
une unité de génération d'hydrogène (201) comprenant un premier liquide contenant de l'eau,
ladite unité de génération d'hydrogène (201) permettant qu'une partie de l'eau contenue dans le premier liquide soit décomposée en hydrogène et en oxygène et qu'au moins une partie du premier liquide soit chauffée en étant exposée aux rayons de la lumière solaire;
un premier échangeur de chaleur (207) pour refroidir le premier liquide qui a été chauffé dans ladite unité de génération d'hydrogène (201), et pour chauffer un deuxième liquide qui est de l'eau, par échange de chaleur entre le premier liquide et le deuxième liquide;
un mécanisme pour introduire, dans l'unité de génération d'hydrogène (201), le premier liquide qui a été refroidi dans le premier échangeur de chaleur (207);
une pile à combustible (401);
un réservoir de stockage d'eau chaude (501);
un deuxième échangeur de chaleur (402) destiné à chauffer le deuxième liquide qui a été chauffé dans le premier échangeur de chaleur (207), par échange de chaleur avec la pile à combustible (401); et
un mécanisme destiné à réunir le deuxième liquide qui a été chauffé dans le deuxième échangeur de chaleur (402) et de l'eau chaude contenue dans ledit réservoir de stockage d'eau chaude (501);
**caractérisé par** un mécanisme destiné à ajuster une température du deuxième liquide en amenant de l'eau froide au deuxième liquide, après que celui-ci a été chauffé dans le premier échangeur de chaleur (207), mais avant qu'il soit soumis à un échange de chaleur avec la pile à combustible (401) dans le deuxième échangeur de chaleur (402).

2. Système de génération d'hydrogène (2A) selon la revendication 1, comprenant en outre:
un troisième échangeur de chaleur (502) pour chauffer de l'eau qui sert de troisième liquide, par échange de chaleur entre l'eau chaude contenue dans le réservoir de stockage d'eau chaude (501) et le troisième liquide,
ledit troisième échangeur de chaleur (502) étant prévu à l'intérieur du réservoir de stockage d'eau chaude (501).

3. Système de génération d'hydrogène (2A) selon la revendication 1 ou 2, dans lequel ledit premier échangeur de chaleur (207) est prévu de manière adjacente à l'unité de génération d'hydrogène (201).

4. Système de génération d'hydrogène (2A) selon la revendication 1 ou 2, comprenant en outre:
un mécanisme destiné à fournir, à la pile à combustible (401), de l'hydrogène généré dans l'unité de génération d'hydrogène (201).

5. Système de génération d'hydrogène (2A) selon la revendication 1 ou 2,
dans lequel de l'eau chaude contenue dans ledit réservoir de stockage d'eau chaude (501) est obtenue en récupérant de la chaleur générée dans l'unité de génération d'hydrogène (201).

6. Système de génération d'hydrogène (2A) selon la revendication 1 ou 2,
dans lequel ladite unité de génération d'hydrogène (201) comprend une électrode semi-conductrice (301) ayant un matériau semi-conducteur apte à décomposer de l'eau en hydrogène et en oxygène;
une contre-électrode (302) qui est réalisée dans un matériau électriquement conducteur et qui est connectée électriquement à l'électrode semi-conductrice (301),
le premier liquide étant en contact avec l'électrode semi-conductrice (301) et la contre-électrode (302), et
un boîtier (304) logeant dans son intérieur l'électrode semi-conductrice (301), la contre-électrode (302) et le premier liquide, et,
dans lequel, lorsque l'électrode semi-conductrice (301) est exposée aux rayons de la lumière solaire, une partie de l'eau contenue dans le premier liquide est décomposée en hydrogène et en oxygène, de sorte que de l'hydrogène est généré.

7. Système de génération d'hydrogène (2A) selon la revendication 6, dans lequel le premier liquide est ramifié en un trajet d'écoulement du côté de l'électrode semi-conductrice (301) et en un trajet d'écoulement du côté de la contre-électrode (302), avant qu'il soit introduit dans l'unité de génération d'hydrogène (201).

8. Système de génération d'hydrogène (2A) selon la revendication 1 ou 2, comprenant en outre:
un dispositif de séparation gaz/liquide (208b) destiné à séparer un mélange d'hydrogène généré dans l'unité de génération d'hydrogène et du premier liquide, en hydrogène et le premier liquide, le dispositif de séparation gaz/liquide (208b) étant prévu à l'extérieur de l'unité de génération d'hydrogène (201).

9. Système de génération d'hydrogène (2A) selon la revendication 1, comprenant en outre:
un mécanisme destiné à diriger le premier liquide vers l'extérieur à travers un trajet d'écoulement.

10. Système de génération d'hydrogène (2A) selon la revendication 1, comprenant en outre:
une unité de stockage (209) destinée à stocker de l'hydrogène qui a été généré dans ladite unité de génération d'hydrogène (201).
